# EUROPEAN PATENT APPLICATION

(11) **EP 2 555 532 A2**
(43) Date of publication of application: **06.02.2013**
(21) Application number: 12172174.0
(22) Date of filing: 15.06.2012
(51) Int. Cl.: H04N 13/04

(54) **Display method, display device, electronic system, and lighting unit**

(30) Priority: 05.08.2011 JP 2011171926; 05.10.2011 JP 2011221275
(71) Applicant: Sony Corporation, Tokyo 108-0075 (JP)
(72) Inventor: Takahashi, Kenichi, Minato-ku, Tokyo 108-0075 (JP); Tomioka, Satoshi, Minato-ku, Tokyo 108-0075 (JP); Sato, Yoshihisa, Minato-ku, Tokyo 108-0075 (JP); Kuwayama, Tetsuro, Minato-ku, Tokyo 108-0075 (JP); Takai, Yuichi, Minato-ku, Tokyo 108-0075 (JP); Morimoto, Tadashi, Minato-ku, Tokyo 108-0075 (JP)
(74) Representative: Jackson, Jonathan Andrew

(57) **Abstract**

A lighting unit includes: a plurality of two-dimensionally-arrayed light emitting sections; and a drive section that drives the plurality of light emitting sections on an individual basis.

## Description

The present disclosure relates in general, but not exclusively, to a display device by which display of a stereoscopic image is allowed, an electronic system which includes the display device, a lighting unit which is loaded on the display device, and a display method by which a stereoscopic image is displayed by using the display device.

A display device by which implementation of stereoscopic image display is allowed has attracted notice in recent years. In stereoscopic image display, a left-eye image and a right-eye image between which parallax is present (which are different from each other in perspective) are displayed and a viewer is allowed to recognize the images as one deep stereoscopic image by observing the images with his/her left and right eyes. In addition, a display device which allows provision of a more natural stereoscopic image for a viewer by displaying three or more images among which parallax is present is also developed.

Display devices as mentioned above are generally divided into one type which would require dedicated glasses and another type which would not require any glasses. A viewer may have an impression that use of the dedicated glasses is troublesome and hence a display device which would not require any dedicated glasses is preferred. As a display device which would not require any dedicated glasses, for example, a lenticular lens system device and a parallax barrier system device are available. The devices of the above mentioned systems are configured such that a plurality of images (perspective images) among which parallax is present are displayed together on an image display panel such that an image which is observed changes as a relative positional relation (an angle) between the display device and the perspective of the viewer changes. As an example of a display device of the parallax barrier system, a display device disclosed, for example, in Japanese Patent Application Publication No. H03-119889 may be given.

Incidentally, an illumination light source which is called a backlight is used in the above mentioned lenticular lens system and parallax barrier system display devices so as to make illumination light from the backlight selectively transmit through a lenticular lens or a parallax barrier. Therefore, it is desirable to increase the utilization efficiency of the illumination light from the backlight. In addition, when stereoscopic image display has been performed by using the lenticular lens or the parallax barrier, a light transmitting region through which the illumination light from the backlight passes and a light shielding region where the illumination light is shielded are fixedly positioned on an image display panel. Therefore, when the orientation of the display device is changed (for example, when the display device is rotated on an optical axis as a central axis) relative to the perspective position of a viewer, it may become difficult for the viewer to visually recognize an appropriate stereoscopic image. Although a method of mechanically changing relative positions of the image display panel and the lenticular lens or the parallax barrier may be contemplated, this method may induce complication and large-sizing of a general configuration of the display device itself.

It is desirable to provide a display device which allows formation of a favorable stereoscopic image in accordance with the attitude of a viewer, an electronic system which includes the display device, and a lighting unit which is loaded on the display device. It is also desirable to provide a display method of implementing favorable stereoscopic display in accordance with the attitude of a viewer by using a display device as mentioned above.

A display method according to an embodiment of the present disclosure displays stereoscopic images with use of a display device provided with a lighting unit and a display section. The lighting unit includes a plurality of two-dimensionally-arrayed light emitting sections, and the display section performs image display through utilizing light from the light emitting sections. The method includes: detecting an attitude of the display device relative to a viewer; driving the plurality of light emitting sections on an individual basis, to allow an emission pattern to be formed according to the attitude of the display device; and displaying a plurality of perspective images all together, according to the attitude of the display device on the display section based on an external image signal.

In the display method according to the embodiment of the present disclosure, the attitude of the display device relative to the viewer, that is, a state of orientation, an angle or the like of the display device relative to the viewer is detected and light is emitted from the plurality of light emitting sections in accordance with the state to form a predetermined emission pattern and to display the plurality of perspective images. As a result, the quality of the stereoscopic image which is visually recognized by the viewer is favorably maintained regardless of a change in the orientation or the angle of the display device relative to the viewer.

A display device according to an embodiment of the present disclosure includes: a lighting unit including a plurality of two-dimensionally-arrayed light emitting sections, and a drive section driving the plurality of light emitting sections on an individual basis; and a display section including a plurality of pixels to perform image display through utilizing light from the light emitting sections.

An electronic system according an embodiment of the present disclosure is provided with a display device. The display device includes: a lighting unit including a plurality of two-dimensionally-arrayed light emitting sections, and a drive section driving the plurality of light emitting sections on an individual basis; and a display section including a plurality of pixels to perform image display through utilizing light from the light emitting sections.

In the display device and the electronic system according to the embodiments of the present disclosure, in the lighting unit, the plurality of two-dimensionally-arrayed light emitting sections are turned on or turned off by the drive section on an individual basis. Thus, switching between two-dimensional image display (planar image display) and three-dimensional image display (stereoscopic image display) is possible by utilizing the lighting unit as a backlight of the display section. That is, in the stereoscopic image display, an emission pattern which is obtained by arranging a plurality of light emitting sections which are located one after another like a strip in one direction so as to be adjacent to one another at predetermined intervals is formed in the lighting unit to generate a plurality of rays of linear-shaped illumination light and to display the plurality of perspective images all together on the display section. While, in the two-dimensional image display, for example, all the light emitting sections are turned on in the lighting unit to generate uniform illumination light which is reduced in variation in luminance over the entire surface.

A lighting unit according to an embodiment of the present disclosure is provided for a display device. The lighting unit includes: a plurality of two-dimensionally-arrayed light emitting sections; and a drive section driving the plurality of light emitting sections on an individual basis.

In the lighting unit according to the embodiment of the present disclosure, the plurality of two-dimensionally-arrayed light emitting sections are turned on or turned off by the drive section on an individual basis. Thus, formation of an arbitrary emission pattern is possible at an arbitrary timing.

According to the display method of the embodiment of the present disclosure, since the attitude of the display device relative to the viewer is detected and the formation of the emission pattern of the lighting unit and the display of the perspective image are performed in accordance with it, it becomes possible for the viewer to recognize a favorable stereoscopic image even when the display device has been rotated in an arbitrary direction.

According to the lighting unit of the embodiment of the present disclosure, it is possible to form the emission pattern obtained by arranging a plurality of light emitting sections which are located one after another like a strip in one direction at predetermined intervals, thereby generating a plurality of rays of linear-shaped illumination light. Therefore, according to the display device and the electronic system of the present disclosure in which the lighting unit is used as the backlight, it is possible to make images that the viewer recognizes with his/her left and right eyes different from each other in accordance with a relative positional relation (an angle) among the emission pattern, the display section, and the perspective position of each of the viewer's left and right eyes. As a result, it becomes possible for the viewer to recognize a stereoscopic image. Here, since it is allowed to arbitrarily set a direction in which the linear-shaped illumination light extends, it becomes possible to address a change in relative relation between the display section and the perspective position of each of the viewer's left and right eyes. In addition, since it is allowed to form an arbitrary emission pattern at an arbitrary timing, it becomes also possible to handle time-division display.

It is to be understood that both the foregoing general description and the following detailed description are exemplary, and are intended to provide further explanation of the technology as claimed.
Various respective aspects and features of the invention are defined in the appended claims. Combinations of features from the dependent claims may be combined with features of the independent claims as appropriate and not merely as explicitly set out in the claims.
Embodiments of the invention will now be described with reference to the accompanying drawings, throughout which like parts are referred to by like references, and in which:

FIG. 1 is a block diagram illustrating an example of a configuration of a display device according to a first embodiment of the present disclosure.

FIG. 2 is an explanatory diagram illustrating an example of a configuration of a display section and a display drive section illustrated in FIG. 1.

FIG. 3A and FIG. 3B are explanatory diagrams illustrating an example of a configuration of a pixel circuit and one example of a sectional configuration of a pixel illustrated in FIG. 2.

FIG. 4 is a sectional diagram illustrating an example of a configuration of the display section and a backlight illustrated in FIG. 1.

FIG. 5 is a sectional diagram illustrating an example of a configuration of a light modulation element illustrated in FIG. 4.

FIG. 6 is a perspective view illustrating an example of an electrode structure of the light modulation element illustrated in FIG. 5.

FIG. 7A, FIG. 7B, and FIG. 7C are schematic diagrams illustrating one example of operation of the light modulation element illustrated in FIG. 4.

FIG. 8A, FIG. 8B, and FIG. 8C are schematic diagram illustrating another example of operation of the light modulation element illustrated in FIG. 4.

FIG. 9 is a schematic diagram illustrating an example of operation of the backlight illustrated in FIG. 1.

FIG. 10 is a schematic diagram illustrating an example of a first pattern of a lower electrode to which a voltage is selectively applied when three-dimensional display is to be performed by the light modulation element illustrated in FIG. 4.

FIG. 11 is a schematic diagram illustrating an example of an emission pattern and linear-shaped illumination light which are formed by the backlight illustrated in FIG. 1.

FIG. 12 is a schematic diagram illustrating an example of three-dimensional display by the display device illustrated in FIG. 1.

FIG. 13 is a schematic diagram illustrating an example of two-dimensional display by the display device illustrated in FIG. 1.

FIG. 14 is another schematic diagram illustrating an example of a second pattern of the lower electrode to which a voltage is selectively applied when three-dimensional display is to be performed by the light modulation element illustrated in FIG. 4.

FIG. 15 is another schematic diagram illustrating an example of an emission pattern and linear-shaped illumination light which are formed by the backlight illustrated in FIG. 1.

FIG. 16 is another schematic diagram illustrating an example of three-dimensional display by the display device illustrated in FIG. 1.

FIG. 17 is a further schematic diagram illustrating an example of a third pattern of the lower electrode to which a voltage is selectively applied when three-dimensional display is to be performed by the light modulation element illustrated in FIG. 4.

FIG. 18 is a perspective view illustrating an example of an electrode structure of the light modulation element as a modification.

FIG. 19 is a sectional diagram illustrating an example of a configuration of electronic paper used in a backlight of a display device according to a second embodiment of the present disclosure.

FIG. 20 is a sectional diagram illustrating an example of an operation of the electronic paper illustrated in FIG. 19.

FIG. 21 is a sectional diagram illustrating an example of a configuration of a backlight in a display device according to a third embodiment of the present disclosure.

FIG. 22 is a sectional diagram illustrating an example of a configuration of a backlight in a display device according to a fourth embodiment of the present disclosure.

FIG. 23A and FIG. 23B are sectional diagrams illustrating an example of a configuration of a backlight in a display device according to a fifth embodiment of the present disclosure.

FIG. 24A and FIG. 24B are perspective views illustrating an example of a configuration of an electronic system which uses the display device.

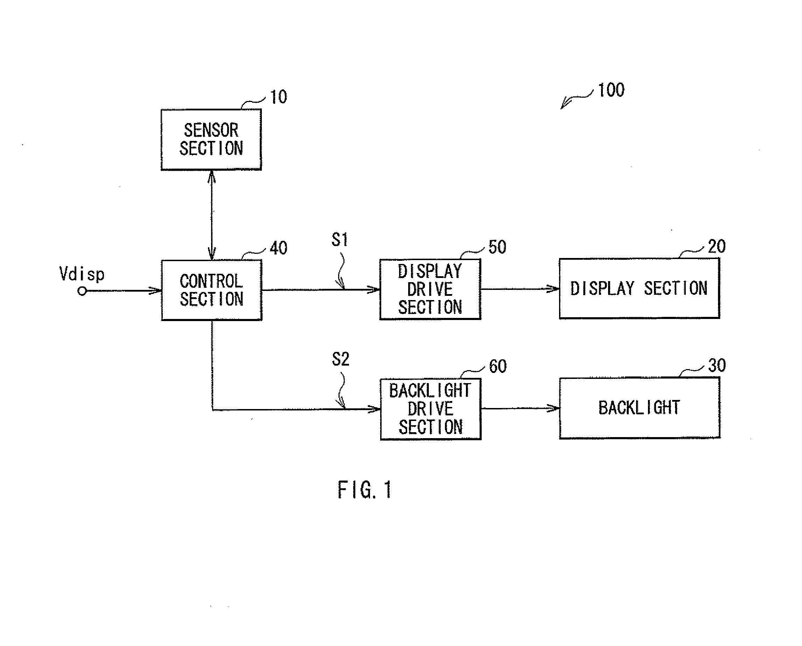

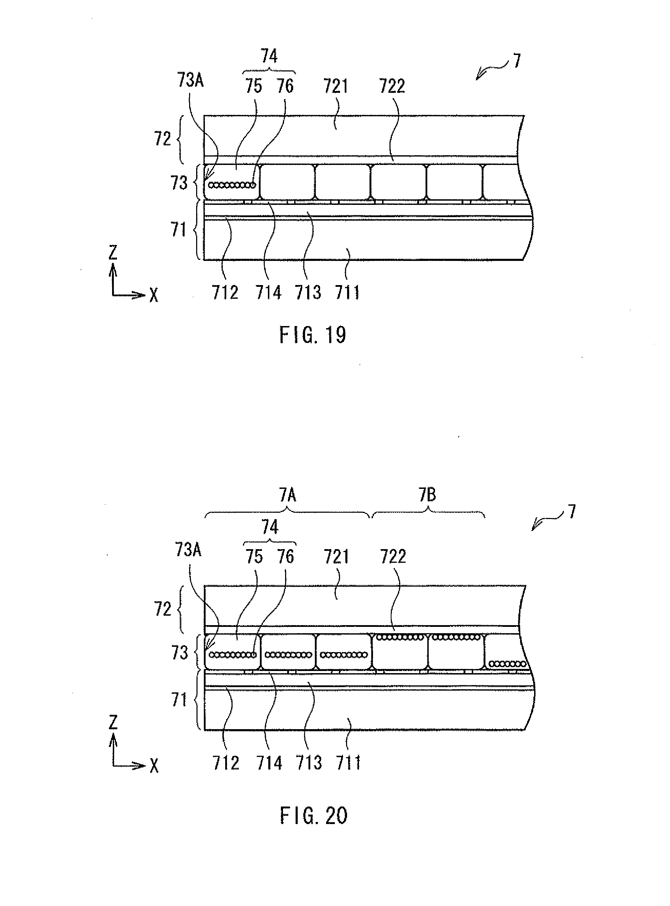

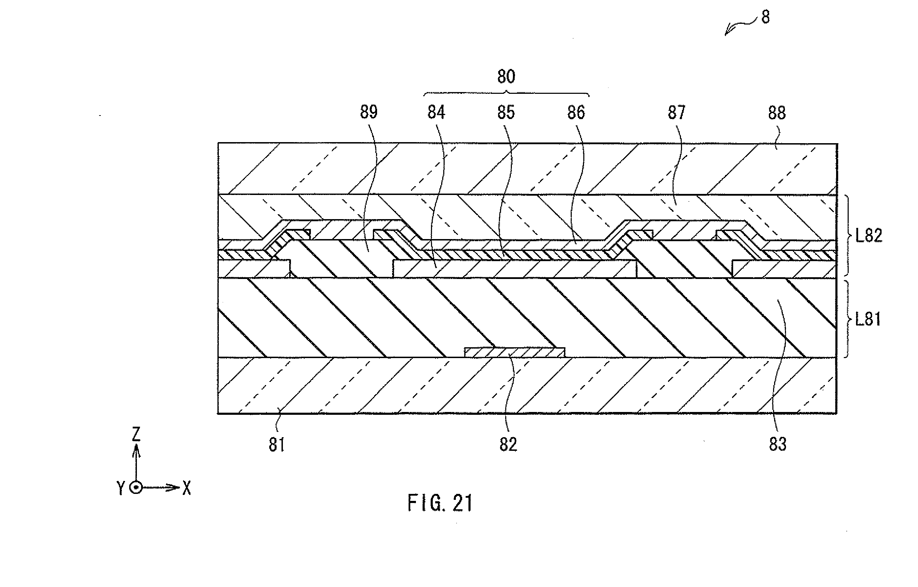

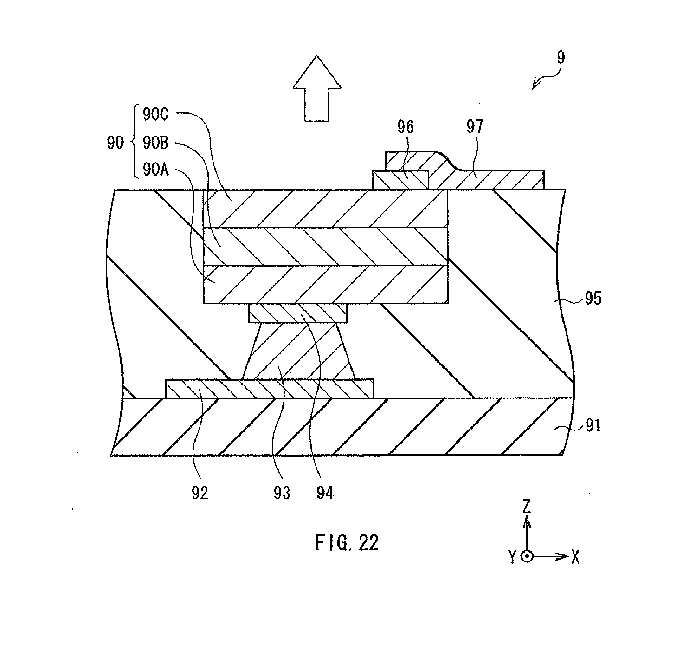

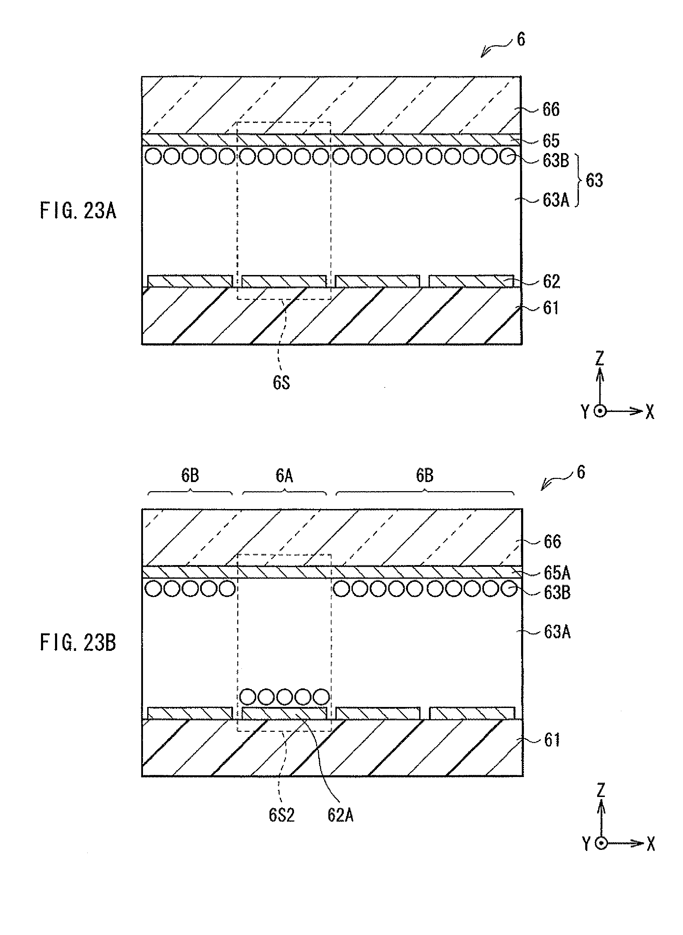

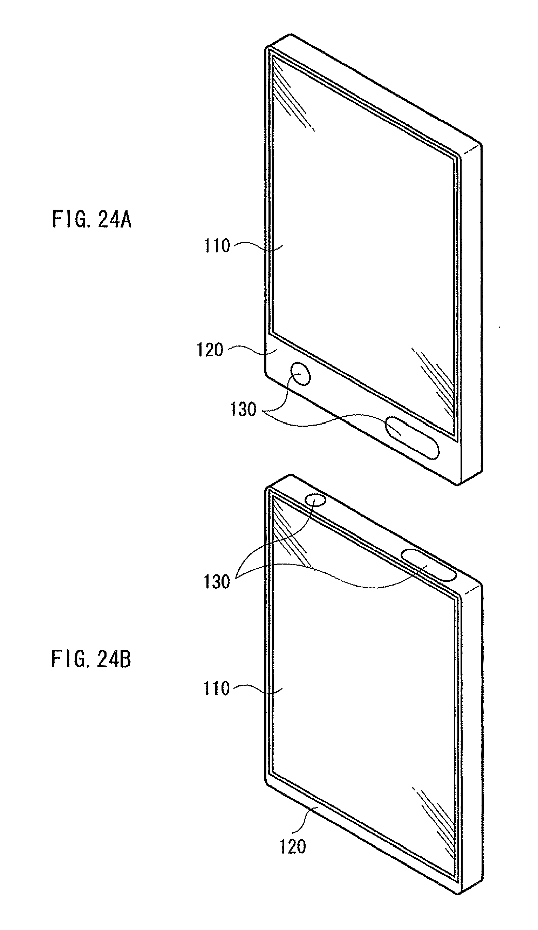

Next, preferred embodiments will be described in detail with reference to the accompanying drawings. It is to be noted that description will be made in the following order.
1. First Embodiment (FIG. 1 to FIG. 18)
   An example (a display device) in which a backlight including a light modulation element (a horizontal PDLC) is used
2. Second Embodiment (FIG. 19 and FIG. 20)
   An example (a display device) in which a backlight including an electrophoresis element is used
3. Third Embodiment (FIG. 21)
   An example (a display device) in which a backlight including an organic light emitting element is used
4. Fourth Embodiment (FIG. 22)
   An example (a display device) in which a backlight including a light emitting diode is used.
5. Fifth Embodiment (FIGs. 23A and 23B)
   An example (a display device) in which a backlight including an electronic particulate element is used.
6. Sixth Embodiment (FIGs. 24A and 24B)
   An example (electronic system) to which a display device is applied

### [First Embodiment]

### [General Configuration]

FIG. 1 is a block diagram illustrating an example of a configuration of a display device 100 according to a first embodiment. The display device 100 is of the type that both of stereoscopic display (three-dimensional display) and normal display (two-dimensional display) may be implemented. The display device 100 includes a sensor section 10, a display section 20, a backlight 30, a control section 40, a display drive section 50, and a backlight drive section 60.

The sensor section 10 functions to successively detect the attitude of the display device 100 on the basis of an instruction from the control section 40 and to send attitude information on the detected attitude to the control section 40. The sensor section 10 is adapted to detect the attitude (the orientation and the angle) of the display device 100 relative to a viewer and is, for example, an acceleration sensor or an image recognition device. When, for example, the image recognition device is used as the sensor section 10, information used to display an image in an appropriately oriented state on the display section 20 may be obtained by discriminating the positions of the viewer's left and right eyes.

The control section 40 is a circuit configured to supply control signals respectively to the display drive section 50 and the backlight drive section 60 on the basis of an external image signal Vdisp supplied from the outside and the attitude information supplied from the sensor section 10 and to control such that the sections 50 and 60 operate in synchronization with each other. Specifically, the control section 40 is configured to supply an image signal S1 based on the image signal Vdisp to the display drive section 50 and supply a backlight control signal S2 to the backlight drive section 60. The control section 40 also controls the operation of the sensor section 10.

The display drive section 50 is adapted to drive the display section 20 on the basis of the image signal S1 supplied from the control section 40. The display section 20 is adapted to perform image display by driving a liquid crystal element and modulating light radiated from the backlight 30.

The backlight drive section 60 is adapted to drive the backlight 30 on the basis of the backlight control signal S2 supplied from the control section 40. The backlight 30 is a lighting unit which has a function of irradiating the display section 20 with planar illumination light or a plurality of rays of linear-shaped illumination light from behind.

The display section 20 is, for example, a transmission type liquid crystal display panel (LCD) each pixel of which is driven in accordance with the image signal S1 and has a structure that a liquid crystal layer is sandwiched by a pair of transparent substrates.

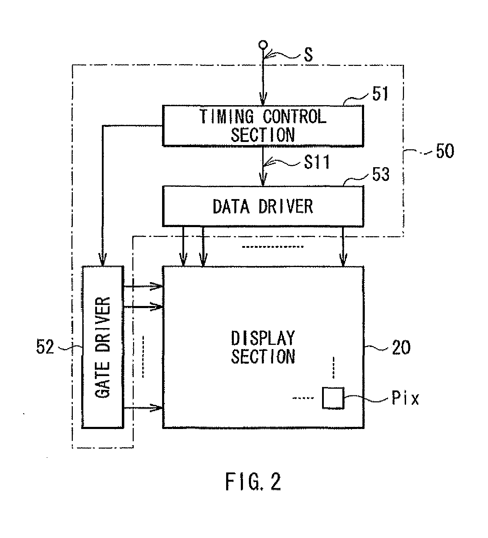

FIG. 2 illustrates an example of a block diagram of the display drive section 50 and the display section 20. Pixels Pix are arranged in a matrix on the display section 20. The display drive section 50 includes a timing control section 51, a gate driver 52, and a data driver 53. The timing control section 51 is adapted to control drive timings of the gate driver 52 and the data driver 53 and to supply the image signal S1 supplied from the control section 40 to the data driver 53 as an image signal S11. The gate driver 52 is adapted to sequentially select the pixels Pix included in the display section 20 line by line in accordance with timing control by the timing control section 51 to perform line sequential scanning. The data driver 53 is adapted to supply a pixel signal based on the image signal S1 to each pixel Pix included in the display section 20. Specifically, the data driver 53 is configured to generate the pixel signal which is an analog signal by performing D/A (digital/analog) conversion on the basis of the image signal S11 and to supply the generated pixel signal to each pixel Pix.

The display section 20 is of the type that a liquid crystal material is sealed between two transparent substrates which are made of, for example, glass or the like. A transparent electrode which is made of, for example, ITO (Indium Tin Oxide) or the like is formed on a part of each transparent substrate which faces the liquid crystal material to configure the pixel Pix together with the liquid crystal material. Liquid crystals of, for example, VA (vertical alignment) mode, IPS (in-plane switching) mode, and TN (twisted nematic) mode using nematic liquid crystals are used as liquid crystal materials of the display section 20.

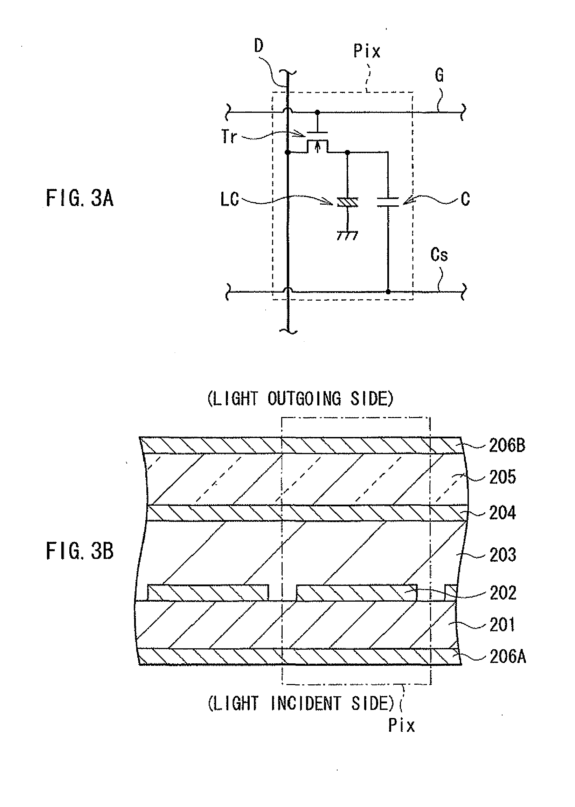

FIG. 3A illustrates an example of a circuit diagram of the pixel Pix. The pixel Pix includes a TFT (Thin Film Transistor) element Tr, a liquid crystal element LC, and a retention volume element C. The TFT element Tr is formed by, for example, a MOS-FET (Metal Oxide Semiconductor-Field Effect Transistor) in which a gate is connected to a gate line G, a source is connected to a data line D, and a drain is connected to one end of the liquid crystal element LC and one end of the retention volume element C. One end of the liquid crystal element LC is connected to a drain of the TFT element Tr and its other end is grounded. One end of the retention volume element C is connected to a drain of the TFT element Tr and its other end is connected to a retention volume line Cs. The gate line G is connected to the gate driver 52, and the data line D is connected to the data driver 53.

FIG. 3B illustrates a sectional configuration of the display section 20 including the pixels Pix. When viewed in section, the display section 20 has a configuration that a liquid crystal layer 203 is sealed between a drive substrate 201 and a counter substrate 205 as illustrated in the drawing. The drive substrate 201 is of the type that a pixel drive circuit including the above mentioned TFT element Tr is formed, and a pixel electrode 202 is disposed on the drive substrate 201 for every pixel Pix. Not illustrated color filter and black matrix are formed on the counter substrate 205 and a counter electrode 204 is disposed on its surface on the side of the liquid crystal layer 203 as an electrode which is commonly provided for the respective pixels Pix. Polarization plates 206A and 206B are affixed to the light incident side (here, the backlight 30 side) and the light outgoing side (here, the side of a viewer) of the display section 20 so as to mutually function as crossed Nicols or parallel Nicols.

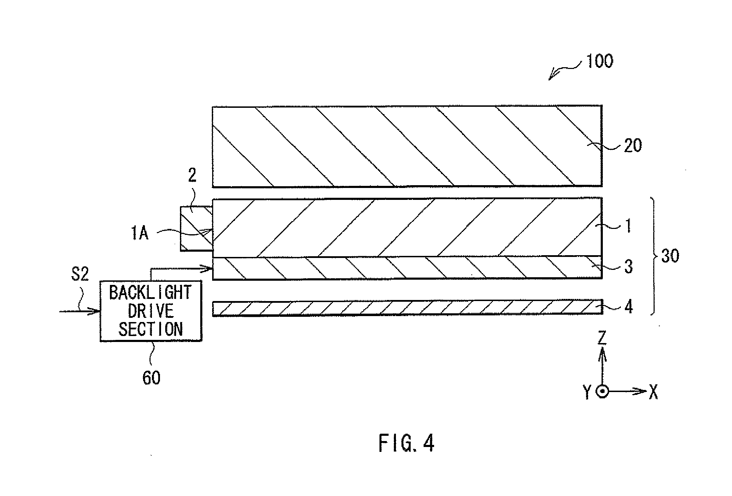

FIG. 4 illustrates an example of a sectional configuration of the display device 100. It is to be noted that FIG. 4 schematically illustrates the sectional configuration and illustrated size and shape may not be the same as the actual ones. The backlight 30 is disposed behind the display section 20 in the display device 100 as illustrated in FIG. 4. The backlight 30 corresponds to one specific example of a "lighting unit". The backlight 30 includes, for example, a light guiding plate 1, a light source 2 which is disposed in opposition to an end surface of the light guiding plate 1, and a light modulation element 3 and a reflector 4 which are disposed behind the light guiding plate 1.

The light guiding plate 1 is adapted to guide light from the light source 2 onto an upper surface of the light guiding plate 1. The light guiding plate 1 has a shape corresponding to that of the display section 20 which is disposed so as to superpose on its surface, such as, for example, a rectangular parallelepiped shape which is surrounded by the upper surface, a lower surface, and end surfaces which connect together the upper and lower surfaces. In the following, one end surface upon which light from the light source 2 is incident will be referred to as a light incidence plane 1A, in the end surfaces of the light guiding plate 1. The light guiding plate I has a function of, for example, scattering light which is incident from the light incidence plane 1A, making it uniform and radiating it from at least one of the upper surface and the lower surface. Incidentally, when luminance is to be made uniform by modulating a voltage applied to the backlight 30, a flat light guiding plate which is not patterned may be used as the light guiding plate 1. The light guiding plate 1 is configured by mainly containing transparent thermoplastic resins such as, for example, polycarbonate resins (PC), acrylic resins (polymethyl methacrylate (PMMA)) and the like.

The light source 2 is a linear-shaped light source and includes, for example, a hot cathode fluorescent lamp (HCFL), a cold cathode fluorescent lamp (CCFL), or a plurality of LEDs (Light Emitting Diodes) which are arrayed in a line. When the light source 2 includes the plurality of LEDs, it is preferable that all the LEDs be white LEDs from the viewpoint of efficiency, thinning, and uniformity. As an alternative, the light source 2 may include red, green, and blue LEDs. The light source 2 may be disposed only at a position opposite to one end surface of the light guiding plate 1 (see FIG. 4) or may be disposed in opposition to two or more end surfaces of the light guiding plate 1.

The reflector 4 is adapted to return light which leaks out from behind the light guiding plate 1 through the light modulation element 3 toward the light guiding plate I and has functions such as, for example, reflecting, diffusing, and scattering functions. Light radiated from the light source 2 may be efficiently utilized and front luminance may be increased owing to provision of the reflector 4. The reflector 4 is made of, for example, a foamed PET (polyethylene telephthalate) sheet, an evaporated silver film, a multilayer reflector film, a white PET sheet or the like. It is to be noted that the reflector 4 may be provided on an as-needed basis and may be sometimes omitted.

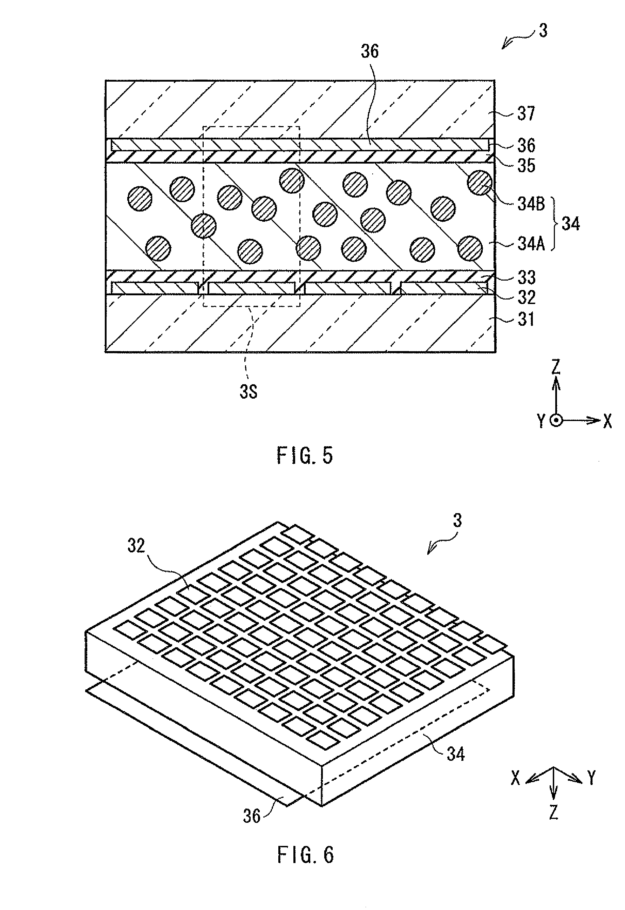

In the first embodiment, the light modulation element 3 is disposed behind the light guiding plate 1 (on the opposite side of the display section 20) and is adhered to a rear surface of the light guiding plate 1, for example, with an adhesive (not illustrated) without interposing an air layer between them. The light modulation element 3 includes a plurality of light modulation cells 3S (described later) serving as light emitting sections which emit light by utilizing light which has been propagated through the light guiding plate 1 from the light source 2. The light modulation element 3 is of the type utilizing a polymer dispersed liquid crystal (PDLC) and is allowed to form a transparent region 3A (described later) and a scattering region 3B (described later) by active-matrix-driving the plurality of light modulation cells 3S in arbitrary patterns along a display face of the display section 20. The light modulation element 3 is of the type that a transparent substrate 31, a lower electrode 32, an orientation film 33, a light modulation layer 34, an orientation film 35, an upper electrode 36, and a transparent substrate 37 are arranged in order, starting from the reflector 4, for example, as illustrated in FIG. 5. Here, an outer surface (opposite to a surface on which the upper electrode 36 is disposed) of the transparent substrate 37 is adhered to the rear surface of the light guiding plate 1. Incidentally, FIG. 5 is a sectional diagram illustrating an example of a configuration of the light modulation element 3.

The transparent substrates 31 and 37 are adapted to support the light modulation layer 34 and are generally formed by substrates which are transparent to visible light such as, for example, glass sheets, plastic films and the like. The plurality of lower electrodes 32 are disposed on a surface of the transparent substrate 31 which is opposite to the transparent substrate 37, for example, as illustrated in FIG. 5 and FIG. 6. The plurality of lower electrodes 32 are separated and insulated from one another. On the other hand, the upper electrode 36 is disposed on a surface of the transparent substrate 37 which is opposite to the transparent substrate 31 and is formed by a solid film which is so integrated as to oppose to all the plurality of lower electrodes 32, for example, as illustrated in FIG. 5 and FIG. 6. Incidentally, FIG. 6 is a perspective view illustrating an electrode structure of the light modulation element 3. However, only the lower electrode 32, the light modulation layer 34, and the upper electrode 36 are illustrated and other constitutional elements of the light modulation element 3 are omitted in FIG. 6. In addition, FIG. 6 illustrates a state viewed from the transparent substrate 31 for ready visual understanding of the shape and arrangement of the lower electrodes 32.

The plurality of lower electrodes 32 are two-dimensionally arrayed in a matrix along a surface of the transparent substrate 31, that is, on an XY plane and each has a rectangular (or square) planar shape. The plurality of lower electrodes 32 are connected with drive elements (not illustrated) such as, for example, TFT elements which are embedded in the transparent substrate 31 in one-to-one correspondence so as to allow individual control of voltages applied thereto. Each drive element is configured, for example, by using a MOS-FET and, for example, its gate is connected to a gate line (not illustrated) which extends in an X-axis direction, and its source is connected to a data line (not illustrated) which extends in a Y-axis direction. The backlight drive section 60 includes a voltage applying section which selectively applies a predetermined voltage to each of the pluralities of gate lines and data lines in accordance with the backlight control signal S2 supplied from the control section 40. In other words, the voltage applying section applies a predetermined voltage, based on the backlight control signal S2 supplied from the control section 40, between one or more selected from the plurality of gate lines and one or more selected from the plurality of data lines. Therefore, the respective drive elements are allowed to be driven on an individual basis by the backlight drive section 60. Thus, when three-dimensional display is to be performed by the display device 100, formation of various emission patterns is made possible by the backlight 30 and linear-shaped illumination light which extends in an arbitrary direction is formed. While, when two-dimensional display is to be performed by the display device 100, all the lower electrodes 32 are energized in order to generate planar illumination light. Operations and the like of the above mentioned elements will be described later.

Each of the lower electrodes 32 and the upper electrode 36 is made of a transparent conductive material such as, for example, indium tin oxide (ITO). However, the lower electrode 32 may be made of a material other than a transparent material and may be made of, for example, metal. Incidentally, if the lower electrode 32 is made of metal, the lower electrode 32 additionally has a function of reflecting light which is incident upon the light modulation element 3 from behind the light guiding plate 1 similarly to the reflector 4. Thus, in the latter case, the reflector 4 may be eliminated.

The light modulation cell 3S is formed in a region where each lower electrode 32 is projected in a laminated direction (a Z-axis direction) of the light modulation element 3, that is, a region where the lower electrodes 32 and the upper electrode 36 mutually superpose, for example, as illustrated by broken lines in FIG. 5. Therefore, the plurality of light modulation cells 3S are two-dimensionally arrayed in a matrix at predetermined intervals along the XY plane in the light modulation element 3.

Each light modulation cell 3S is allowed to be separately and independently driven by applying a predetermined voltage between a lower electrode 32 concerned and the upper electrode 36. Specifically, each cell 3S exhibits transparency or scattering property to the light from the light source 2 in accordance with the magnitude of the voltage applied between the lower electrode 32 and the upper electrode 36. Incidentally, the transparency and scattering property will be described in detail later in explanation of the light modulation layer 34.

The orientation films 33 and 35 are adapted to orient, for example, a liquid crystal and a monomer used in the light modulation layer 34. Although a vertical orientation film and a horizontal orientation film may be given as examples of the kinds of orientation films, the horizontal orientation films are used as the orientation films 33 and 35 in the first embodiment. For example, an orientation film which is formed by rubbing polyimide, polyamide imide, polyvinyl alcohol, and/or the like and an orientation film which is grooved by transfer or etching may be given as examples of the horizontal orientation film. For example, an orientation film which is formed by obliquely depositing an inorganic material such as silicon oxide or the like, a diamond-like carbon orientation film which is formed by ion beam irradiation, and an orientation film in which an electrode pattern slit is formed may be also given as examples of the horizontal orientation film. When plastic films are used as the transparent substrates 31 and 37, it is preferable that polyamide imide which may be formed at a temperature equal to or lower than 100 degrees centigrade be used as the material of the orientation films 33 and 35 because it is desirable to reduce a firing temperature in a firing process performed after the orientation films 33 and 35 have been applied onto the surfaces of the transparent substrates 31 and 37 to a lowest possible value in a manufacturing step.

It is good enough for both the vertical and horizontal orientation films to have a function of orienting the liquid crystal and the monomer and reliability in repetitive application of the voltage which would be requested for a normal liquid crystal display may not be requested because the reliability in voltage application after producing a device is determined depending on an interface between a monomer-polymerized material and a liquid crystal. The liquid crystal and the monomer used in the light modulation layer 34 may be also oriented, for example, by applying an electric field or a magnetic field between the lower electrode 32 and the upper electrode 36, instead of using the orientation film. That is, it is allowed to fix a state that the liquid crystal and the monomer are oriented in a voltage-applied state by being irradiated with ultraviolet rays, while applying the electric field or the magnetic field between the lower electrode 32 and the upper electrode 36. When the voltage is used for formation of orientation films, an electrode for orientation may be formed separately from an electrode for driving, or a two-frequency liquid crystal in which a dielectric anisotropy code is inverted depending on a frequency may be used as a liquid crystal material. When a magnetic field is used for formation of orientation films, it is preferable that a material which is large in anisotropy of magnetic susceptibility be used as the orientation film and it is preferable that a material, for example, having many benzene rings be used as the orientation film.

The light modulation layer 34 exhibits scattering property or transparency to light from the light source 20 in accordance with the magnitude of an electric field applied. The light modulation layer 34 is a composite layer which includes a bulk 34A and a plurality of fine particles 34B which are dispersed in the bulk 34A. The bulk 34A and the fine particles 34B are optically anisotropic. In addition, the bulk 34A and the fine particles 34B are different from each other in speed of response to the electric field. The bulk 34A has, for example, a striped structure or a porous structure which does not respond to the electric field, or a rod-like structure which is lower in speed of response than the fine particles 34B.

The bulk 34A is made by a polymer material which is obtained by polymerizing, for example, a low molecular monomer. The bulk 34A is formed by polymerizing an orientable and polymerizable material (for example, a monomer) which is oriented, for example, in an oriented direction of the fine particles 34B or in oriented directions of the orientation films 33 and 35 with at least one of heat and light. A striped structure, a porous structure, or a rod-like structure of the bulk 34A has the major axis which is directed, for example, to be parallel with the light incidence plane 1A of the light guiding plate 1 and to intersect the surfaces of the transparent substrates 31 and 37 at a small angle θ1 (described later). When the bulk 34A has the striped structure, it is preferable that a mean size of the striped structure in the miner axis direction be equal to or more than 0.1 µm and equal to or less than 10 µm and it is more preferable that it be within a range from 0.2 µm or more to 2.0 µm or less from the viewpoint of increasing the scattering property of guided light. In addition, it is preferable that the mean size of the striped structure in the miner axis direction be within a range from 0.5 µm or more to 5 µm or less and it is more preferable that it be within a range from 1 µm to 3 µm from the viewpoint of reducing wavelength dependency of scattering. The size of the striped structure may be observed through a polarization microscope, a confocal microscope, an electron microscope or the like.

On the other hand, the fine particle 34B mainly contains, for example, a liquid crystal material and has a sufficiently higher speed of response than the bulk 34A. A liquid crystal material (a liquid crystal molecule) contained in the fine particle 34B is, for example, a rod-like molecule. It is preferable that a liquid crystal having the positive refractive-index anisotropy (a so-called positive liquid crystal) be used as the liquid crystal molecule contained in the fine particle 34B.

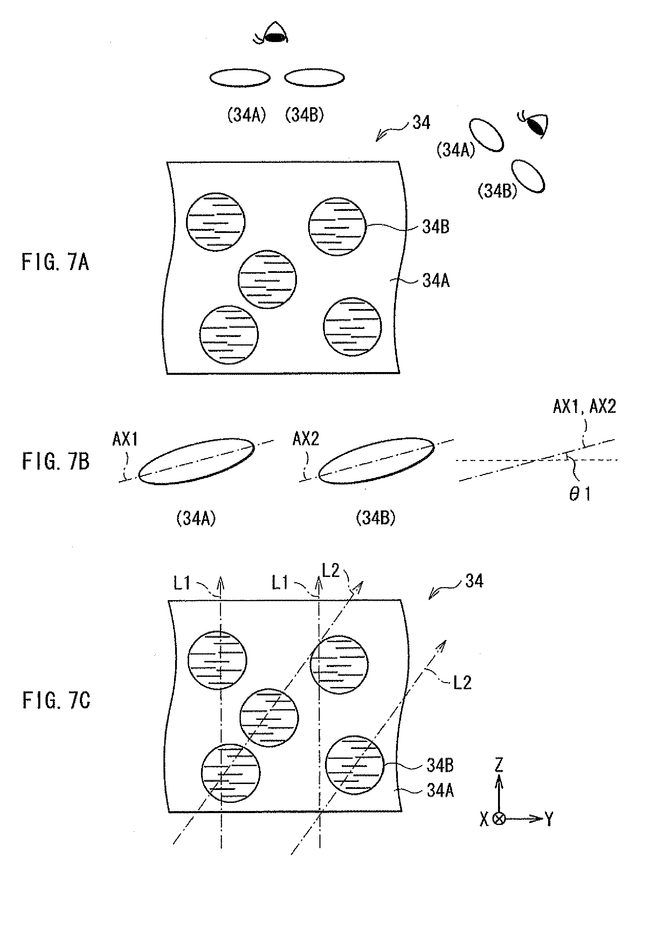

FIG. 7A schematically illustrates an example of an orientation state in the fine particle 34B when a voltage is not being applied between the lower electrode 32 and the upper electrode 36. Incidentally, illustration of the orientation state in the bulk 34A is omitted in FIG. 7A. FIG. 7B illustrates examples of index ellipsoids indicating refractive-index anisotropies of the bulk 34A and the fine particle 34B when the voltage is not being applied between the lower electrode 32 and the upper electrode 36. The above mentioned index ellipsoid expresses the refractive index of linearly polarized light which has been incident from various directions by a tensor ellipsoid and the refractive index may be geometrically found by observing the section of the ellipsoid from a light incident direction. FIG. 7C schematically illustrates an example of a state that light L1 which directs in a frontal direction and light L2 which directs in an oblique direction pass through the light modulation layer 34 when the voltage is not being applied between the lower electrode 32 and the upper electrode 36.

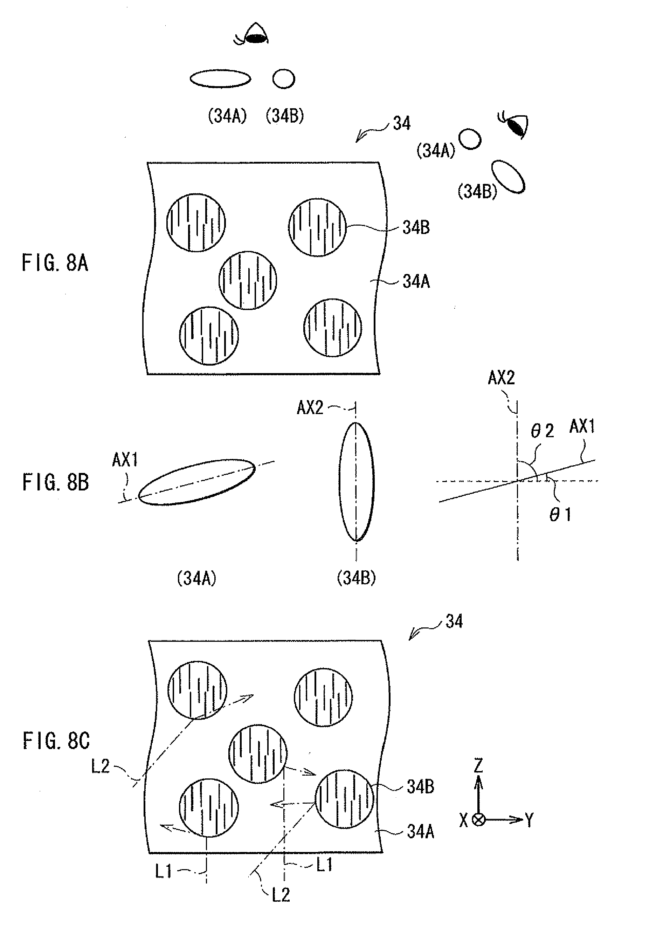

FIG. 8A schematically illustrates an example of the orientation state in the fine particle 34B when a voltage is being applied between the lower electrode 32 and the upper electrode 36. Incidentally, illustration of the orientation state in the bulk 34A is omitted in FIG. 8A. FIG. 8B illustrates examples of index ellipsoids indicating refractive-index anisotropies of the bulk 34A and the fine particle 34B when the voltage is being applied between the lower electrode 32 and the upper electrode 36. FIG. 8C schematically illustrates an example of a state that the light L1 which directs in a frontal direction and the light L2 which directs in an oblique direction are scattered in the light modulation layer 34 when the voltage is being applied between the lower electrode 32 and the upper electrode 36.

The bulk 34A and the fine particle 34B are configured such that the orientation of an optical axis AX1 of the bulk 34A matches (is parallel with) the orientation of an optical axis AX2 of the fine particle 34B when the voltage is not being applied between the lower electrode 32 and the upper electrode 36, for example, as illustrated in FIG. 7A and FIG. 7B. Incidentally, the optical axes AX1 and AX2 indicate lines which run in parallel with a light ray traveling direction in which the refractive index would have one value regardless of a polarization direction of the light. Incidentally, the orientations of the optical axes AX1 and AX2 need not typically match each other and a slight deviation in orientation between the optical axes AX1 and AX2 is allowable depending on, for example, manufacturing errors.

The fine particle 34B is configured such that its optical axis AX2 is parallel with the light incidence plane 1A of the light guiding plate 1, for example, when the voltage is not being applied between the lower electrode 32 and the upper electrode 36. The fine particle 34B is also configured such that its optical axis AX2 intersects the surfaces of the transparent substrates 31 and 37 at the small angle θ1, for example, when the voltage is not being applied between the lower electrode 32 and the upper electrode 36 (see FIG. 7B). Incidentally, the angle θ1 will be described in detail in explanation of the material of the fine particle 34B.

On the other hand, the bulk 34A is configured such that its optical axis AX1 is maintained constant regardless of, for example, whether the voltage is being applied between the lower electrode 32 and the upper electrode 36. Specifically, the bulk 34A is configured such that its optical axis AX1 is parallel with the light incidence plane 1A of the light guiding plate 1 and intersects the surfaces of the transparent substrates 31 and 37 at the predetermined angle θ1, for example, as illustrated in FIG. 7A, FIG. 7B, FIG. 8A, and FIG. 8B. That is, the optical axis AX1 of the bulk 34a is parallel with the optical axis AX2 of the fine particle 34B when the voltage is not being applied between the lower electrode 32 and the upper electrode 36.

Incidentally, the optical axis AX2 need not typically be parallel with the light incidence plane 1A of the light guiding plate 1 and intersect the surfaces of the transparent substrates 31 and 37 at the angle θ1, and the optical axis AX2 may intersect the surfaces of the transparent substrates 31 and 37 at an angle which is slightly different from the angle θ1 depending on, for example, manufacturing errors. Similarly, the optical axes AX1 and AX2 need not typically be parallel with the light incidence plane 1A of the light guiding plate 1 and may have a small angle relative to the light incidence plane 1A of the light guiding plate 1 depending on, for example, manufacturing errors.

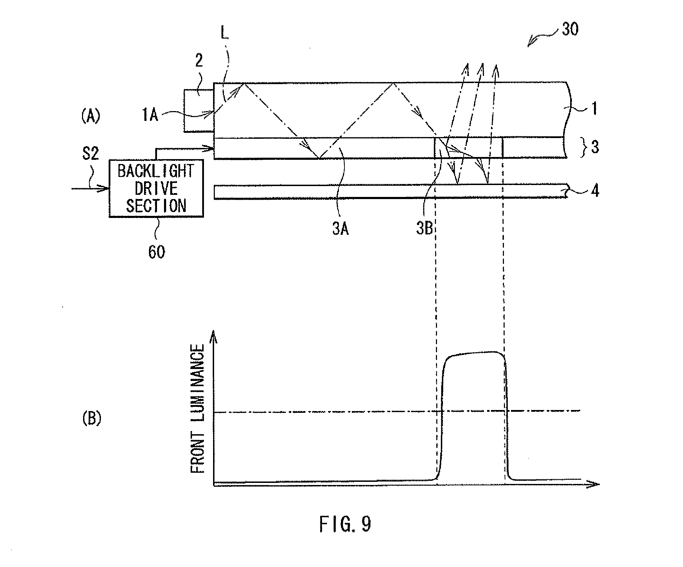

Here, it is preferable that the refractive index of ordinary ray of the bulk 34A be equal to that of the fine particle 34B and the refractive index of extraordinary ray of the bulk 34A be equal to that of the fine particle 34B. In the above mentioned case, almost no difference in refractive index is observed in all directions including frontal and oblique directions and a high transparency is obtained as illustrated in FIG. 7A, for example, when the voltage is not being applied between the lower electrode 32 and the upper electrode 36. Therefore, the front-wise directed light L1 and the obliquely directed light L2 pass through the light modulation layer 34 without being scattered in the light modulation layer 34, for example, as illustrated in FIG. 7C. As a result, light L (obliquely directed light) from the light source 2 is totally reflected at an interface (an interface between the transparent substrate 31 and the light guiding plate 1, and air) of the transparent region 3A, for example, as illustrated in (A) and (B) of FIG. 9 and the luminance (the luminance of a black-displayed part) of the transparent region 3A is reduced in comparison with a case that the light modulation element 3 is not included (a one-point chain line in (B) of FIG. 9).

The bulk 34A and the fine particle 34B are configured such that the orientation of the optical axis AX1 of the bulk 34A is different from (intersects) the orientation of the optical axis AX2 of the fine particle 34B as illustrated in FIG. 8B, for example, when the voltage is being applied between the lower electrode 32 and the upper electrode 36. In addition, the fine particle 34B is configured such that its optical axis AX2 is parallel with the light incidence plane 1A of the light guiding plate 1 and intersects the surfaces of the transparent substrates 31 and 37 at an angle θ2 (for example, 90 degrees) which is larger than the angle θ1, for example, when the voltage is being applied between the lower electrode 32 and the upper electrode 36. Incidentally, the angle θ2 will be described in detail in explanation of the material of the fine particle 34B.

Therefore, a difference in refractive index is increased in all directions including the frontal and oblique directions in the light modulation layer 34 and hence a high scattering property is obtained when the voltage is being applied between the lower electrode 32 and the upper electrode 36. Thus, the front-wise directed light L1 and the obliquely directed light L2 are scattered in the light modulation layer 34, for example, as illustrated in FIG. 8C. As a result, the light L (obliquely directed light) from the light source 2 passes through an interface (an interface between the transparent substrate 31. and the light guiding plate 1, and air) of the scattering region 3B and the light which has passed toward the reflector 4 is reflected by the reflector 4 and passes through the light modulation element 3, for example, as illustrated in (A) of FIG. 9. Therefore, the luminance of the scattering region 3B is greatly increased in comparison with the case that the light modulation element 3 is not included (the one-point chain line in (B) of FIG. 9) and the luminance (pushing-up of luminance) of a partially white-displayed part is increased by the amount corresponding to a reduction in luminance of the transparent region 3A.

Although a slight deviation in refractive index of ordinary ray between the bulk 34A and the fine particle 34B is allowable depending on, for example, manufacturing errors, it is preferable that the deviation be, for example, equal to or less than 0.1 and it is more preferable that the deviation be equal to or less than 0.05. Similarly, although a slight deviation in refractive index of extraordinary ray between the bulk 34A and the fine particle 34B is allowable depending on, for example, manufacturing errors, it is preferable that the deviation be, for example, equal to or less than 0.1 and it is more preferable that the deviation be equal to or less than 0.05.

It is preferable that a refractive index difference (Δnₚ = refractive index of extraordinary ray nₑp - refractive index of ordinary ray n_{oP}) of the bulk 34A and a refractive index difference (Δn_{L} = refractive index of extraordinary ray n_{eL} - refractive index of ordinary ray n_{oL}) of the fine particle 34B be as large as possible. It is preferable that the differences be equal to or more than 0.05, it is more preferable that the differences be equal to or more than 0.1, and it is still more preferable that the differences be equal to or more than 0.15 because when the refractive index differences of the bulk 34A and the fine particle 34B are large, the scattering power of the light modulation layer 34 is increased and hence ready breaking of light guiding conditions and ready taking-out of light from the light guiding plate 1 are allowed.

Here, the major-axis direction of the liquid crystal molecule is parallel with the optical axis AX2 in the fine particle 34B when the voltage is not being applied between the lower electrode 32 and the upper electrode 36. In the above mentioned case, the major axis of the liquid crystal molecule in the fine particle 34B is parallel with the light incidence plane 1A of the light guiding plate 1 and defines the small angle θ1 relative to the surfaces of the transparent substrates 31 and 37. That is, the liquid crystal molecule in the fine particle 43B is oriented in a state that its major axis tilts by the angle θ1 in a plane which is parallel with the light incidence plane 1A of the light guiding plate when the voltage is not being applied between the lower electrodes 32 and the upper electrode 36. The angle θ1 is a so-called pre-tilt angle. It is preferable that the angle θ1 be, for example, within a range from 0,1 degrees or more to 30 degrees or less, it is more preferable that it be within a range from 0.5 degrees or more to 10 degrees or less, and it is still more preferable that it be within a range from 0.7 degrees or more to 2 degrees or less. If the angle 01 is increased, the scattering efficiency may be liable to be reduced for reasons which will be described later. If the angle θ1 is reduced too much, the azimuth angle at which the liquid crystal builds up may be varied when the voltage is applied. In some cases, the liquid crystal may build up in a 184 degree-reversed orientation (a reverse tilt). Therefore, since effective utilization of the refractive index differences of the fine particle 34B and the bulk 34A is not allowed, the scattering efficiency may be liable to be reduced to reduce the luminance.

The major-axis direction of the liquid crystal molecule intersects (or is orthogonal to) the optical axis AX2 in the fine particle 34B when the voltage is being applied between the lower electrode 32 and the upper electrode 36. At that time, the major axis of the liquid crystal molecule in the fine particle 34B is parallel with the light incidence plane 1A of the light guiding plate 1 and defines the angle θ2 for example, 90 degrees) which is larger than the angle θ1 relative to the surfaces of the transparent substrates 31 and 37. That is, the liquid crystal molecule in the fine particle 34B is oriented in a state that its major axis tilts at the angle θ2 in a plane which is parallel with the light incidence plane 1A of the light guiding plate 1 when the voltage is being applied between the lower electrode 32 and the upper electrode 36.

Although any material may be used as the above mentioned orientable and polymerizable monomer which configures the bulk 34A as long as it is a material which is optically anisotropic and is compounded with a liquid crystal, it is preferable that the material be an ultraviolet-curable low molecular monomer in the first embodiment. Since it is preferable that it match a material (a polymer material) which is formed by polymerizing a liquid crystal and a low molecular monomer in direction of optical anisotropy in a state that no voltage is applied, it is preferable that the liquid crystal and the low molecular monomer be oriented in the same direction before it is cured with ultraviolet rays. It is preferable that a monomer materials used be a rod-shaped one when a liquid crystal is used as the fine particle 34B and the liquid crystal is a rod-shaped molecule. Under the circumstances, it is preferable that a material having both polymerizability and liquid crystallinity be used as the monomer material, and it is preferable that it have at least one functional group which is selected from a group including, for example, an acrylate group, a methacrylate group, an acryloyloxy group, a methacryloyloxy group, a vinyl ether group, and an epoxy group as a polymeric functional group. These functional groups may be polymerized by being irradiated with ultraviolet rays, infrared rays, or electron beams, or by being heated. A liquid-crystalline material having a multifunctional group may be added to the above in order to suppress a reduction in orientability when irradiated with ultraviolet rays. It is referable that a two-functional liquid-crystalline monomer be used as the raw material of the bulk 34A when the bulk 34A has the above mentioned striped structure. In addition, a mono-functional monomer may be added to the raw material of the bulk 34A in order to adjust the temperature at which liquid-crystallinity exhibits or monomers having three or more functional groups may be added thereto in order to improve crosslinking density.

The backlight drive section 60 is configured to control the magnitude of the voltage to be applied between a pair of electrodes (the lower electrode 32 and the upper electrode 36) of each light modulation cell 3S such that, for example, the optical axis AX2 of the fine particle 34B is parallel or almost parallel with the optical axis AX1 of the bulk 34A in one light modulation cell 3S and the optical axis AX2 of the fine particle 34B intersects or is orthogonal to the optical axis AX1 of the bulk 34A in another light modulation cell 3S, That is, the backlight drive section 60 is configured to make the orientations of the optical axes AX1 and AX2 of the bulk 34A and the fine particle 34B match (almost match) each other or to make them different from (or orthogonal to) each other by controlling an electric field to be applied.

The backlight drive section 60 is configured to output a plurality of rays of linear-shaped illumination light from the backlight 30 when a signal for instructing three-dimensional display has been input as the backlight control signal S2. Specifically, the backlight drive section 60 is configured to apply a voltage at which the light modulation layer 34 would exhibit scattering property to a plurality of specific lower electrodes 32 and to apply a voltage at which the light modulation layer 34 would exhibit transparency to remaining lower electrodes 32. In other words, the backlight drive section 60 controls the magnitude of the voltage to be applied between each lower electrode 32 and the upper electrode 36 such that the optical axis AX2 of the fine particle 34B intersects the optical axis AX1 of the bulk 34A in each of the plurality of selected light modulation cells 3S. At the same time, the backlight drive section 60 controls the magnitude of the voltage to be applied between each lower electrode 32 and the upper electrode 36 such that the optical axis AX2 of the fine particle 34B is parallel with the optical axis AX1 of the bulk 34A in each of all the remaining unselected light modulation cells 3S.

The backlight drive section 60 is also configured to output planar illumination light from the backlight 30 when a signal for instructing two-dimensional display has been input as the backlight control signal S2. Specifically, the backlight drive section 60 is configured to apply a voltage at which the light modulation layer 34 would exhibit scattering property to all the plurality of lower electrodes 32. In other words, the backlight drive section 60 controls the magnitude of the voltage to be applied between each lower electrode 32 and the upper electrode 36 such that the optical axis AX2 of the fine particle 34B intersects the optical axis AX1 of the bulk 34A in each of all the light modulation cells 3S included in the light modulation element 3.

### [Display Method]

Next, a method of displaying a stereoscopic image using the display device 100 according to the first embodiment will be described. The operation and effect of the display device 100 will be described in addition to the above.

First, the attitude of the display device 100 relative to a viewer is detected when three-dimensional display (stereoscopic image display) is to be performed by the display device 100. Specifically, to which directions horizontal (lateral) and vertical directions for the viewer correspond is determined by the control section 40 by detecting the positions of, for example, of the viewer's left and right eyes by the sensor section 10. Next, a plurality of perspective images which are obtained according to the attitude of the display device 100 are displayed all together on the display section 20 on the basis of the image signal S1. An emission pattern corresponding to the attitude of the display device 100 is formed by separately driving the plurality of light modulation cells 3S in synchronization with the above.

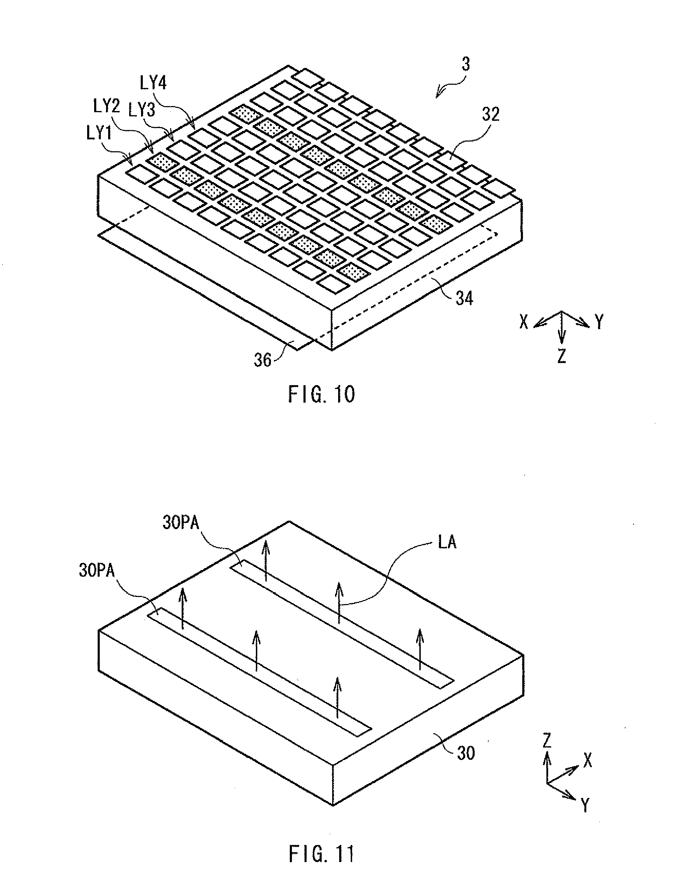

In the backlight 30, a voltage is applied between a pair of electrodes (the lower electrode 32 and the upper electrode 36) such that the optical axis AX2 of the fine particle 34B tilts in a direction which is different from that of the optical axis AX 1 of the bulk 34A in a selected light modulation cell 3S. Thus, the selected light modulation cell 3S serves as the scattering region 3B and other (unselected) light modulation cells 3S serve as the transparent (transmitting) regions 3A in the light modulation element 3. As a result, light which has been radiated from the light source 2 and incident upon the light guiding plate 1 passes through the transparent region 3A and is scattered in the scattering region 3B (see (A) of FIG. 9). Light which is included in the scattered light and has passed through a lower surface of the scattering region 3B is reflected by the reflector 4, is again returned to the light guiding plate 1, and is radiated from an upper surface of the backlight 30. While, light which is included in the scattered light and has be directed toward an upper surface of the scattering region 3B passes through the light guiding plate 1 and is radiated from the upper surface thereof (that is, the upper surface of the backlight 30) (see (A) of FIG. 9). In three-dimensional display, light is hardly radiated from the upper surface of the transparent region 3A and is radiated from the upper surface of the scattering region 3B as described above. Here, when it has been determined that the horizontal direction for the viewer corresponds to the X-axis direction on the basis of information sent from the sensor section 10, a voltage is applied only to lower electrodes 32 included in a line LY2 of lines LY1 to LY4, each including lower electrodes 32 which are arrayed one after another in the Y-axis direction, for example, as illustrated in FIG. 10. Then, each light modulation cell 3S which includes the lower electrodes 32 included in the line LY2 serves as each scattering region 3B. In the above mentioned situation, since a space between adjacent lower electrodes 32 is narrow, rays of radiated light (scattered light) from the respective scattering regions 3B are substantially connected one after another in the Y-axis direction. Thus, a plurality of linear-shaped emission patterns 30PA, each extending in the Y-axis direction, are formed to be arrayed at predetermined intervals in the X-axis direction by the plurality of scattering regions 3B which are located one after another in the Y-axis direction, for example, as illustrated in FIG. 11. The emission patterns 30PA correspond to arrangement positions of the selected lower electrodes 32. As a result, a plurality of rays of linear-shaped illumination light LA which extend in the Y-axis direction are output toward the display section 20. It is to be noted that intervals at which the emission patterns 30PA are arranged may be appropriately selected depending on the size and arrangement state of each pixel included in the display section 20 and/or the number of perspectives.

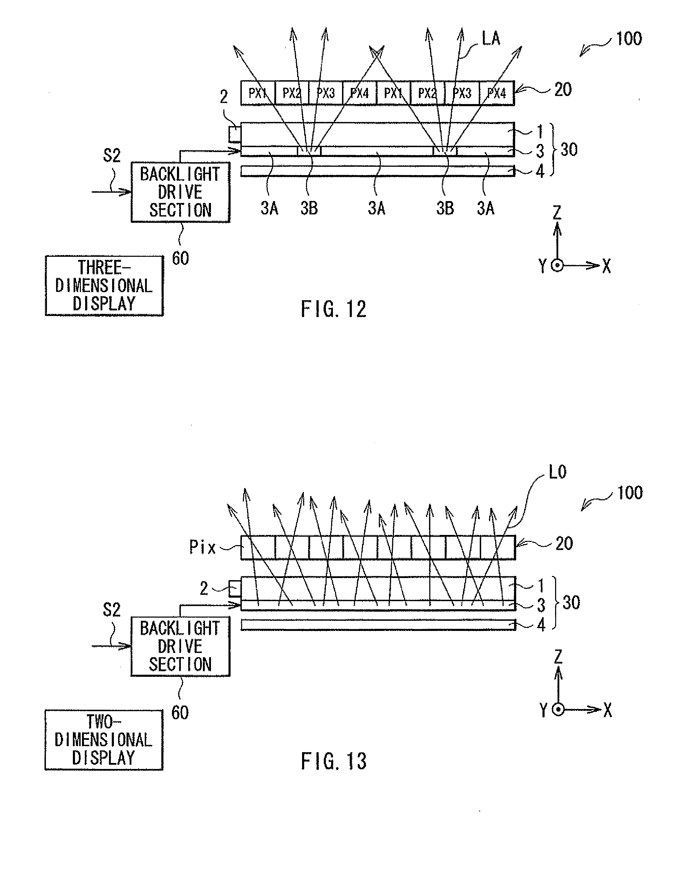

Each ray of linear-shaped illumination light LA which has been output from the backlight 30 is incident upon a rear surface of the display section 20, for example, as illustrated in FIG. 12. Here, it is supposed that, for example, four perspective images (first to four perspective images) are to be displayed all together on the display section 20. In the above mentioned case, pixels PX1 to PX4 which are repetitively and sequentially arrayed in the X-axis direction display the respective first to four perspective images. Although the rays of linear-shaped illumination light LA from the respective scattering regions 3B are incident upon the pixels P1 to P4 which are repetitively and sequentially arrayed in the X-axis direction, the positions of the respective pixels PX1 to PX4 relative to the respective scattering regions 3B are maintained constant over the entire surface of the display device 100. That is, for example, the rays of linear-shaped illumination light LA from the scattering regions 3B are incident upon all the pixels PX1 on the display section 20 substantially at the same angle. This also applies to the pixels PX2 to PX4. As a result, rays of image light which have been respectively modulated therein are output from the respective pixels PX1 to PX4 at predetermined angles. Since the viewer observes mutually different perspective images with his/her left and right eyes, the viewer recognizes that a three-dimensional image (a stereoscopic image) is being displayed on the display section 20. Incidentally, the number of perspectives is not limited to four and any number of perspectives may be set.

As an alternative, for example, two kinds of image signals may be alternately supplied to the display drive section 50 so as to alternately display two kinds of images in time division on the display section 20 on the basis of the two kinds of image signals when a stereoscopic image is to be displayed in the display device 100. In the above mentioned case, it is desirable for the backlight 30 to successively form two kinds of emission patterns 30PA in synchronization with time-divided image display. It becomes possible to increase the resolution of the stereoscopic image by performing time-divided image display as mentioned above.

On the other hand, a voltage is applied between the upper electrode 36 and the lower electrodes 32 included in all the light modulation cells 3S when a two-dimensional image is to be displayed. Thus, all the light modulation cells 3S serve as the scattering regions 3B. As a result, light which has been radiated from the light source 2 and incident upon the light guiding plate 1 is scattered in the scattering region or reflected by the reflector 4 and is planarly radiated from the entire upper surface of the backlight 30. That is, planar illumination light L (described later) is output from the backlight 30 toward the display section 20.

The planar illumination light L which has been output from the backlight 30 is incident upon the rear surface of the display section 20, for example, as illustrated in FIG. 13. At that time, a single perspective image for two-dimensional image display is displayed on the display section 20. Rays of planar illumination light LO are incident upon the respective pixels Pix at all possible angles and rays of image light which have been modulated in the respective pixels are output from the pixels Pix. Since the viewer observes the same image with his/her both eyes, the viewer recognizes that a two-dimensional image (a planar image) is being displayed on the display section 20.

Incidentally, it is possible to form an arbitrary emission pattern in accordance with the attitude of the display device 100 relative to the viewer by appropriately selecting the light modulation cell 3S to be used as the scattering region 3B in the backlight 30 of the first embodiment. That is, it is possible to generate linear-shaped illumination light which extends in an arbitrary direction.

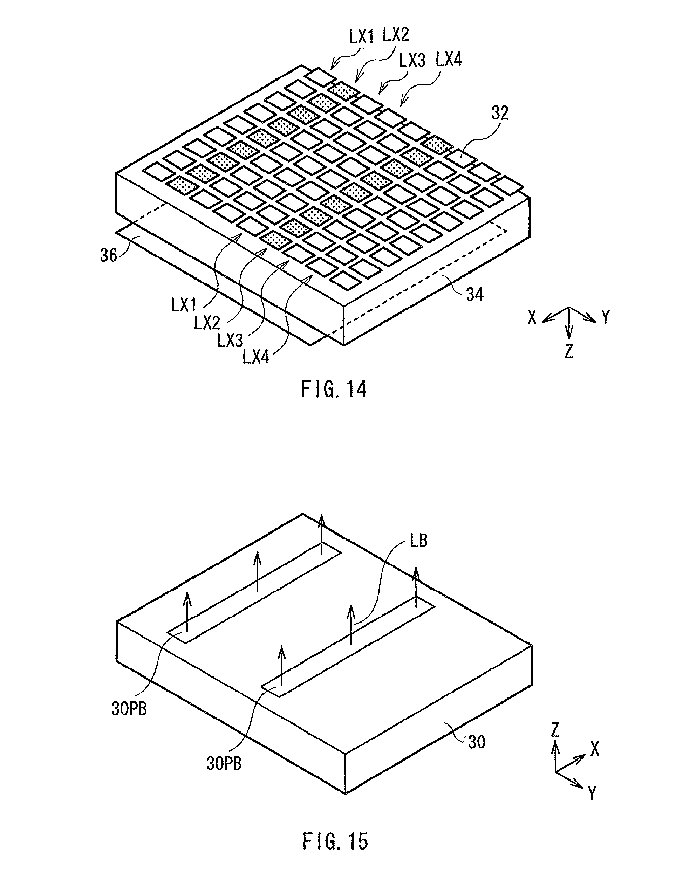

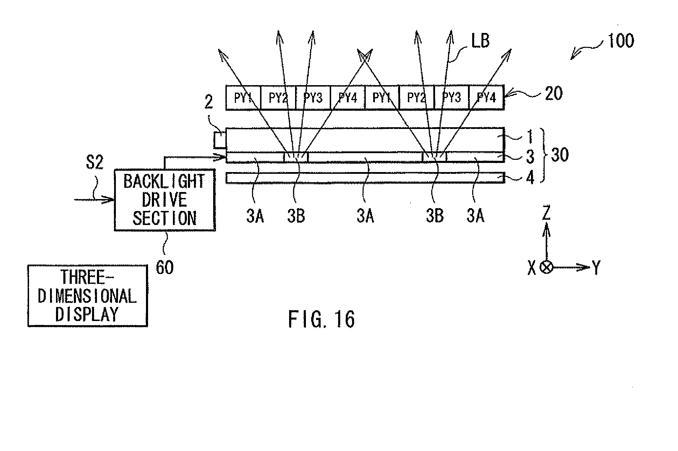

Here, a case in which it has been determined that, for example, the horizontal direction for the viewer corresponds to the Y-axis direction on the basis of information from the sensor section 10 will be described. In the above mentioned case, in the backlight 30, a voltage is applied only to the lower electrodes 32 included, for example, in a line LX2 of lines LX1 to LX4, each including the lower electrodes 32 which are located one after another in the X-axis direction, for example, as illustrated in FIG. 14. Then, each light modulation cell 3S which includes the lower electrodes 32 included in the line LX2 serves as the scattering region 3B. In this situation, since a space between adjacent lower electrodes 32 is narrow, rays of radiated light (scattered light rays) from the respective scattering regions 3B are substantially connected one after another in the X-axis direction. Thus, a plurality of linear-shaped emission patterns 30PB which extend in the X-axis direction are formed to be arrayed at predetermined intervals in the X-axis direction by the plurality of scattering regions 3B which are located one after another in the X-axis direction in the backlight 30, for example, as illustrated in FIG. 15. The emission pattern 30PB corresponds to the arrangement position of the selected lower electrodes 32. As a result, a plurality of rays of linear-shaped illumination light LB which extend in the X-axis direction are output toward the display section 20. Pixels PY1 to PY4 which are repetitively and sequentially arrayed in the Y-axis direction display all together first to fourth perspective images on the display section 20 upon which the rays of linear-shaped illumination light LB are incident, for example, as illustrated in FIG. 16. Rays of image light which have been respectively modulated in the pixels are output from the pixels PY1 to PY4 at predetermined angles. Since the viewer observes mutually different perspective images with his/her left and right eyes, the viewer recognizes that a three-dimensional image (a stereoscopic image) is being displayed on the display section 20. It is to be noted that also in the above mentioned case, the number of perspectives is not limited to four and any number of perspectives may be set.

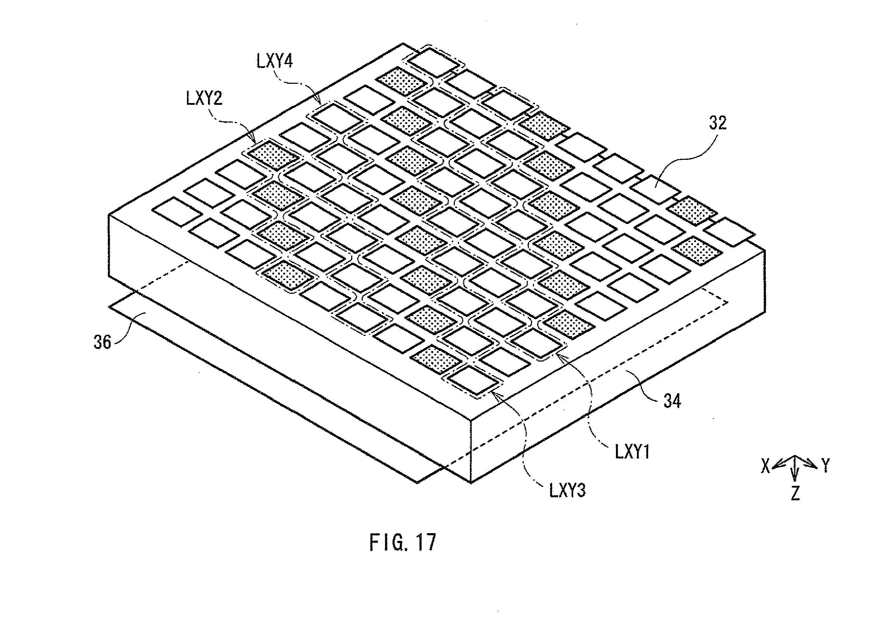

For example, when the horizontal direction for the viewer has been determined to correspond to a 45 degree-tilted direction (an oblique direction) relative to both the X-axis and Y-axis on the basis of information sent from the sensor section 10, operation as follows may be performed. That is, in the backlight 30, a voltage is applied to only the lower electrodes 32, for example, included in a line LXY2 of lines LXY1 to LXY4, each including the lower electrodes 32 which are located one after another in the oblique direction, for example, as illustrated in FIG. 17. Then, each light modulation cell 3S including the lower electrodes 32 in the line LXY2 serves as each scattering region 3B. Thus, in the backlight 30, a plurality of linear-shaped emission patterns which extend in the oblique direction are formed by the plurality of scattering regions 3B which are arrayed one after another in the oblique direction. As a result, a plurality of rays of linear-shaped illumination light which extend in the oblique direction are output toward the display section 20. A plurality of perspective images are displayed all together by pixels which are sequentially and repetitively arrayed in a direction intersecting a direction in which the rays of linear-shaped illumination light extend on the display section 20. Therefore, it becomes possible for the viewer to observe mutually different perspective images with his/her left and right eyes and to recognize that a stereoscopic image is being displayed on the display section 20.

According to the backlight 30 of the first embodiment, it is possible to form the emission patterns in which the plurality of light modulation cells 3S which are located one after another like a strip in the same direction are arrayed at predetermined intervals and to generate the plurality of rays of linear-shaped illumination light as described above. Thus, according the display device 100 which includes the backlight 30, it becomes possible to make images that the viewer recognizes with his/her left and right eyes different from each other in accordance with a relative positional relation (angle) among each of the emission patterns, the display section 20, and each of perspective positions of the viewer's left and right eyes. As a result, it becomes possible for the viewer to recognize a stereoscopic image. Here, since a direction in which the rays of linear-shaped illumination light extend may be arbitrarily set, it is possible to address a change in correlation between the display section and each of the perspective positions of the viewer's left and right eyes. That is, since the attitude of the display device relative to the viewer is detected by the sensor section 10, and emission patterns of the backlight 30 are formed and perspective images are displayed in accordance with a result of detection, it becomes possible for the viewer to recognize a favorable stereoscopic image even when the display device 100 is rotated in an arbitrary direction. Since an arbitrary emission pattern may be formed at an arbitrary timing, it is possible to handle time division display on the display section 20. Incidentally, it is desirable that a direction in which linear-shaped illumination light extends be different from a direction in which the pixels Pix (color filters) of the display section 20 are arrayed in order to avoid generation of moire in stereoscopic image display. Thus, the lower electrodes 32 may be arrayed in a direction (an oblique direction) intersecting the X-axis direction and the Y-axis direction, for example, when the pixels Pix (the color filters) of the display section 20 are arrayed in a matrix in the X-axis and Y-axis directions. As a result, it becomes possible to obtain the linear-shaped illumination light which extends in a direction intersecting a direction in which the pixels Pix (the color filters) are arrayed to avoid generation of moire.

Also, since three-dimensional display is attained with no installation of a parallax barrier in the first embodiment, it is possible to utilize light from the light source 2 as the linear-shaped illumination light more efficiently than would be possible when the parallax barrier is used. In addition, since three-dimensional display is attained with no installation of a cylindrical lens in the first embodiment, a disadvantage of occurrence of an aberration caused by the cylindrical lens is avoided. Further, since neither the parallax barrier nor the cylindrical lens is used, it is possible to further simplify the general configuration.

### [Modification]

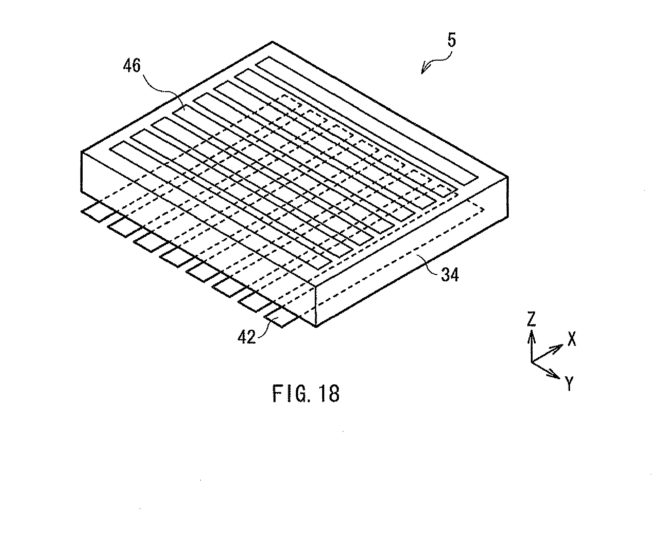

The first embodiment is configured such that the drive element is disposed for every light modulation cell 3S and the respective light modulation cell 3S are active-matrix-driven to form the transparent region 3A and the scattering region 3B. On the other hand, the present modification includes a light modulation element 5 which is configured to form the transparent region 3A and the scattering region 3B by passive-matrix-driving the respective light modulation cells 3S. FIG. 18 illustrates a perspective configuration of essential parts of the light modulation element 5 according to the present modification. The light modulation element 5 is configured in the same manner as the light modulation element 3 excepting a point that a lower electrode 42 and an upper electrode 46 are disposed in place of the lower electrodes 32 and the upper electrode 36. The lower electrode 42 and the upper electrode 46 are configured as, for example, strip electrodes which are rectangular in plane, and plural lower electrodes and upper electrodes are disposed. The plurality of lower electrodes 42 are arranged, for example, so as to extend in the X-axis direction and to be arrayed in the Y-axis direction. While, the plurality of upper electrodes 46 are arranged, for example, so as to extend in the Y-axis direction and to be arrayed in the X-axis direction. In the light modulation element 5, each region where the lower electrode 42 intersects the upper electrode 46 defines the light modulation cell 3S. Thus, it is possible to make a desired light modulation cell 3S serve as the scattering region 3B by selecting a predetermined lower electrode 42 and a predetermined upper electrode 46 and applying a voltage between them. Therefore, the same effect as that of the first embodiment is obtained by the modification. In addition, since a necessity of providing a drive element for every light modulation cell 3S may be eliminated, it is possible to simplify the configuration of a drive circuit in the light modulation element 5. Incidentally, directions in which the lower electrodes 42 and the upper electrodes 46 extend are not limited to mutually orthogonal directions and may be arbitrarily selected. However, it is desirable that a direction in which the light modulation cells 3S are arrayed be made different from a direction in which the pixels Fix (the color filters) of the display section 20 are arrayed in order to avoid generation of moire in stereoscopic image display. Thus, the lower electrodes 42 and the upper electrodes 46 may be extended in directions (oblique directions) respectively intersecting both the X-axis direction and the Y-axis directions, for example, when the pixels Pix (the color filters) of the display section 20 are arrayed in a matrix in the X-axis and Y-axis directions. As a result, it becomes possible to obtain linear-shaped illumination light which extends in a direction intersecting a direction in which the pixels Pix (the color filters) are arrayed to avoid generation of moire.

### [Second Embodiment]

Next, a second embodiment of the present disclosure will be described in detail with reference to the accompanying drawings. Description has been made by illustrating the backlight 30 which includes the light modulation element 3 or 5 utilizing the PDLC as the lighting unit in the first embodiment. On the other hand, the display device according to the second embodiment is of the type that electronic paper 7 which includes an electrophoresis element, for example, as illustrated in FIG. 19 in the backlight 30 as the lighting unit, in place of the light modulation element 3 or 5. The display device according to the second embodiment is configured in the same manner as the display device 100 excepting a point that the electronic paper 7 is used. Thus, in the following, the electronic paper 7 will be described.

### [Configuration of Electronic Paper]

The electronic paper 7 is of the type that a drive substrate 71 and a counter substrate 72 are arranged in opposition via an electrophoresis element layer 73 which includes a plurality of microcapsules 73A. In the electronic paper 7, illumination light is radiated from the counter substrate 72.

The drive substrate 71 is of the type that, for example, a wiring layer 712 which includes mutually stereoscopically intersecting plural signal lines and scanning lines (not illustrated), a semiconductor layer 713 which includes a drive element (not illustrated) such as a TFT element or the like, and a plurality of pixel electrodes 714 are formed in this order on a surface of a support base 711. The drive elements (TFTs) and the pixel electrodes 714 are arranged in a matrix corresponding to, for example, the arrangement of the pixels Pix (see FIG. 2) of the display section 20.

The support base 711 is made of, for example, an inorganic material, a metallic material, a plastic material and/or the like. The inorganic material includes, for example, silicon (Si), silicon oxide (SiOₓ), silicon nitride (SiNₓ), aluminum oxide (AlQₓ), and/or the like. The silicon oxide includes glass, spin-on-glass (SOG) and/or the like. The metallic material includes, for example, aluminum (Al), nickel (Ni), stainless steel, and/or the like. The plastic material includes, for example, polycarbonate (PC), polyethylene terephthalate (PET), polyethylene naphthalate (PEN), polyether ether ketone (PEEK), and/or the like.

The support base 711 may be either light-permeable or light-impermeable, because illumination light is radiated from the counter substrate 72. In addition, the support base 711 may be a rigid substrate such as a wafer or a flexible thin-layer glass sheet or film.

The drive element is a switching element for selecting a pixel. The signal lines and the scanning lines, and the drive elements are embedded in the wiring layer 712 and the semiconductor layer 713, for example, with insulating resin materials such as polyimide and the like.

The pixel electrode 714 is made of various conductive materials such as, for example, metallic materials such as gold (Au), silver (Ag), and/or copper (Cu), compounds such as indium tin oxide (ITO) and/or the like, or other alloys. The pixel electrode 714 is connected with the drive element through a contact hole (not illustrated) which is formed, for example, in the semiconductor layer 713.

The counter substrate 72 is of the type that, for example, a counter electrode 722 is formed over one surface of a support base 721. That is, the counter electrode 722 is a common electrode which is commonly prepared for the plurality of pixels. Alternatively, the counter electrode 722 may be arranged in a strip-form.

The support base 721 is made of the same material as the support base 711 excepting a point that it is light-permeable. The counter electrode 722 is made of a translucent conductive material (a transparent electrode material) such as, for example, indium tin oxide (ITO), antimony tin oxide (ATO), fluorine-doped tin oxide (FTO), aluminum-doped zinc oxide (AZO) and/or the like. The support base 721 is in contact with the light guiding plate 1 (see FIG. 4) and is made of a material which is the same as that of the light guiding plate 1 in refractive index in order to ensure light-guiding property. As an alternative, the light guiding plate 1 may be also used as the support base 721.

The electrophoresis element layer 73 is of the type that, for example, the plurality of the microcapsules 73A into which electrophoresis elements 74 are sealed are densely arrayed and is disposed between the drive substrate 71 and the counter substrate 72. Incidentally, the number of the microcapsules 73A need not necessarily be the same as the number of the pixel electrodes 714. The electrophoresis element 74 is adapted to create contrast by utilizing an electrophoresis phenomenon and contains an insulating liquid 75 and a plurality of electrophoresis particles 76.

The insulating liquid 75 contains, for example, one, two or more kinds of organic solvents such as paraffin and/or iso-paraffin specifically. It is preferable that the viscosity and refractive index of the insulating liquid 75 be as low as possible because the mobility (speed of response) of the electrophoresis particle 76 is improved and energy (power consumption) used to move the electrophoresis particles 76 is reduced accordingly.

Incidentally, the insulating liquid 75 may contain various materials on an as-needed basis. For example, a coloring agent, a charge controlling agent, a dispersion stabilizer, a viscosity improver, a surfactant and/or resin may be given as examples of the materials.

The electrophoresis particle 76 is a charged particle dispersed in the insulating liquid 75 and is movable within the microcapsule 73A in accordance with an electric field applied. The electrophoresis particle 76 contains one, two or more kinds of particles (powder) of, for example, an organic pigment, an inorganic pigment, a dye, a carbon material, a metallic material, a metal oxide, glass, a high polymer material (resin), and/or the like. As an alternative, the electrophoresis particle 76 may be a ground particle or an encapsulated particle on a solid basis of resin containing the above mentioned particles. It is to be noted that materials corresponding to the carbon material, the metallic material, the metal oxide, the glass, the high polymer material, and/or the like are excluded from the materials corresponding to the organic pigment, the inorganic pigment, the dye, and/or the like.

The organic pigment includes, for example, azo pigments, metal complex azo pigments, azo poly-condensation pigments, flavanthrone pigments, benzimidazolone pigments, phthalocyanine pigments, quinacridone pigments, anthraquinone pigments, perylene pigments, perinone pigments, anthrapyridine pigments, pyranthrone pigments, dioxazine pigments, thioindigoid pigments, isoindolinone pigments, quinophthalone pigments, indanthrene pigments, and/or the like. The inorganic pigment includes, for example, zinc oxide, antimony white, carbon black, iron black, titanium boride, bengala (iron oxide red), mapicoyellow, lead tetroxide, cadomiumyellow, zinc sulfide, lithopone, barium sulfide, cadomium selenide, calcium carbonate, barium sulfate, chromium zinc oxide, lead sulfate, barium carbonate, white lead, alumina white, and/or the like. The dye includes, for example, nigrosine dyes, azo dyes, phthalocyanine dyes, quinophthalone dyes, anthrachinon dyes, methine dyes, and/or the like. The carbon material includes, for example, carbon black and/or the like. The metallic material includes, for example, gold, silver, copper and/or the like. The metal oxide includes, for example, titanium oxide, zinc oxide, zirconium oxide, barium titanate, potassium titanate, and/or the like. The high polymer material includes, for example, high polymer compounds into which a functional group having a light absorption region in a visible light region is introduced. No limitation is set on the kind of the high polymer compound as long as it is of the type having the light absorption region in the visible light region.

White or almost white color is preferable as the color of the electrophoresis particle 76 in order to increase the intensity of light reflected from the electrophoresis particle 76 by effectively inducing scattering of visible light with the electrophoresis particle 76, thereby obtaining brighter illumination light. Thus, metal oxide such as, for example, titanium oxide, zinc oxide, zirconium oxide, barium titanate, potassium titanate, and/or the like are preferable as the specific constitutional material of the electrophoresis particle 76.

Incidentally, it is preferable that the electrophoresis particle 76 be liable to be dispersed and charged over a long period of time in the insulating liquid 75. Thus, a dispersing agent (a charge modifier) may be used in order to make the electrophoresis particle 76 disperse by electrostatic repulsion, surface treatment may be performed on the electrophoresis particle 76, or both of them may be adopted simultaneously.

### [Operation and Effect of Electronic Paper]

In the electronic paper 7, the plurality of electrophoresis particles 76 are located at positions separated from the counter substrate 72 in their initial state, for example, as illustrated in FIG. 19. In the above mentioned case, no contrast is created (no reflected light is generated) when observing the electrophoresis element layer 73 from the counter substrate 72.

When a voltage is applied between the counter electrode 722 and a predetermined pixel electrode 714 which has been selected by the drive element and an electric field is generated between the electrodes, the electrophoresis particle 76 which is present in a region where the electric field is generated moves to the vicinity of the counter electrode 722, for example, as illustrated in FIG. 20. As a result, the electrophoresis particles 76 which are present away from the counter substrate 72 and the electrophoresis particles 76 which are present in the vicinity of the counter substrate 72 coexist in the electrophoresis element layer 73. As a result, such a state is obtained that the contrast is created when observing the electrophoresis particles 73 from the counter substrate 72. That is, since light which has been incident upon the electrophoresis element layer 73 through the light guiding plate 1 is reflected and scattered by the electrophoresis particles 76 which have moved to the vicinity of the counter electrode 722, that region serves as a scattering region 7B and the luminance of the region is more increased than a region (a non-scattering region 7A) other than the above. Thus, it becomes possible for the electronic paper 7 to form an arbitrary emission pattern in a plane. Owing to the above, it becomes possible to output, for example, linear-shaped illumination light so as to direct toward the display section 20 also in the backlight 30 in which the electronic paper 7 is used. Thus, the second embodiment attains the same effect as the first embodiment. Incidentally, if a black particle such as, for example, carbon black is used as the electrophoresis particle 76, incident light may be partially absorbed by the particle and the intensity of reflected light may be more reduced than would be reduced when a white particle is used. Therefore, efficient utilization of light energy of the light source 2 is possible by using a white particle as the electrophoresis particle 76.

Although the second embodiment is configured such that the drive elements are disposed respectively for the plurality of pixel electrodes 714 which are arranged in a matrix so as to active-matrix-drive the electrophoresis element layer 73, an arbitrary emission pattern may be formed by passive-matrix-driving the electrophoresis element layer 73.

### [Third Embodiment]

Next, a third embodiment of present disclosure will be described in detail with reference to the accompanying drawings. In the first embodiment, description has been made by illustrating the backlight 30 which includes the light modulation element 3 or 5 utilizing the PDLC as the lighting unit. On the other hand, a display device according to the third embodiment is of the type that a backlight 8 which includes an organic light emitting element 80 illustrated, for example, in FIG. 21 is used in place of the backlight 30 as the lighting unit. FIG. 21 is an enlarged sectional diagram illustrating essential parts of the backlight 8. The display device according to the third embodiment is configured in the same manner as the display device 100 excepting a point that the backlight 8 is used. Thus, in the following, the backlight 8 will be described.

### [Configuration of Backlight]

The backlight 8 is arranged in opposition to the light incident side of the display section 20. The backlight 8 is of the type that a drive circuit forming layer L81, a light emitting element forming layer L82 which includes the organic light emitting element 80, a sealing layer 87, and a counter substrate 88 are laminated in order, for example, on a support substrate 81, starting from the opposite side of the display section 20. The plurality of organic light emitting elements 80 are arranged in a matrix along mutually opposite surfaces of the support substrate 81 and the counter substrate 88.

The support substrate 81 is made of, for example, a glass or plastic material which would block transmission of water (moisture) and oxygen. Since light is taken out from the counter substrate 88 in a top-emission type element, the support substrate 81 may be made of either a permeable material or an impermeable material. The support substrate 81 may be made of a flexible plastic material when the display device is configured as a flexible display.

A drive circuit which includes a plurality of drive elements 82 such as TFTs adapted to individually drive the organic light emitting elements 80 is disposed in the drive circuit forming layer L81. The drive circuit includes, for example, signal lines, scanning lines, power supply lines and the like in addition to the drive elements 82 and these elements and lines are generally covered with a protection layer 83.

The organic light emitting element 80, an insulating layer 89, and the sealing layer 87 which covers them are disposed in the light emitting element forming layer L82.

### [Configuration of Organic Light Emitting Element]

The organic light emitting element 80 is of the type that a first electrode 84 as an anode electrode, an organic layer 85 including a light emitting layer, and a second electrode 86 as a cathode electrode are laminated in order, starting from the support substrate 81. The organic layer 85 and the first electrode 84 are partitioned by an insulating layer 89 for every organic light emitting element 80. On the other hand, the second electrode 86 is commonly provided for all the organic light emitting elements 80.

The organic layer 85 has a configuration in which, for example, a positive hole injection layer, a positive hole transport layer, a light emitting layer, and an electron transport layer are laminated in order, starting from the first electrode 84. Incidentally, layers other than the light emitting layer may be disposed on an as-needed basis.

The insulating layer 89 is disposed so as to fill a gap (which is commonly formed) between the first electrodes 84 and between the organic layers 85 of the adjacent organic light emitting elements 80. That is, the insulating layer 89 is adapted to ensure insulation between the first electrode 84 and the second electrode 86 and to accurately define a light emitting region of the organic light emitting element 80.

The sealing layer 87 is made of an insulating resin material such as, for example, polyimide and/or the like similarly to the protection layer 83.

The counter substrate 88 is adapted to seal the organic light emitting element 80 together with the sealing layer 87 and an adhesive layer (not illustrated) which is made of thermosetting resin or the like, and is made of a transparent glass or plastic material which transmits light generated from the light emitting layer included in the organic layer 85.

### [Operation and Effect of Backlight]

The backlight 8 makes it possible to emit light from the organic layer 85 by activating one drive element 82 corresponding to a desired organic light emitting element 80 and applying a voltage between the first electrode 84 and the second electrode 86 of the organic light emitting element 80. Therefore, the backlight 8 makes it possible to form an arbitrary emission pattern in the XY plane by appropriately selecting one organic light emitting element 80 from which light is to be emitted and activating one drive element (TFT) 82 corresponding to each of the selected organic light emitting element 80. Owing to the above, it is possible to output, for example, linear-shaped illumination light so as to direct toward the display section 20 also in the backlight 8. Thus, the third embodiment attains the same effect as the first embodiment.

Although the third embodiment is configured such that the drive element 82 is disposed for every organic light emitting element 80 to active-matrix-drive each organic light emitting element 80, an arbitrary emission pattern may be formed by passive-matrix-driving each organic light emitting element 80.

### [Fourth Embodiment]

Next, a fourth embodiment of the present disclosure will be described in detail with reference to the accompanying drawings. Description has been made by illustrating the backlight 30 which includes the light modulation element 3 or 5 utilizing the PDLC as the lighting unit in the first embodiment. On the other hand, a display device according to the fourth embodiment is of the type that a backlight 9 which includes a light emitting diode 90, for example, illustrated in FIG. 22 is used in place of the backlight 30 as the lighting unit. FIG. 22 is an enlarged sectional diagram illustrating essential parts of the backlight 9. The display device according to the fourth embodiment is configured in the same manner as the display device 100 excepting a point that the backlight 9 is used. Thus, in the following, the backlight 9 will be described.

### [Configuration of Backlight]

The backlight 9 is arranged in opposition to the light incident side of the display section 20. The backlight 9 is of the type that, for example, an anode take-out electrode 92, a contact section 93, an anode contact electrode 94, and a light emitting diode (LED) 90 are laminated in order on a support substrate 91, starting from the opposite side of the display section 20. The LED 90 is, for example, a gallium-nitride-based light emitting diode and has a laminated structure which includes, for example, a clad layer 90A made of p-GaN, an active layer 90B made of GaInN, and a window layer 90C made of n-GaN. The plurality of LEDs 90 are arranged in a matrix along a surface of the support substrate 91 and light is radiated from each LED 90 in a direction of an arrow illustrated in the drawing by voltage application. The surroundings of the LED 90 are filled with an insulating layer 95. A cathode contact electrode 96 is disposed on a part of a light outgoing plane of the window layer 90C. The cathode contact electrode 96 is connected to the outside via a cathode take-out electrode 97.

The backlight 9 so configured also makes it possible to form an arbitrary emission pattern in an XY plane by selectively emitting light from the plurality of LEDs 90 which are arranged in a matrix. Thus, the backlight 9 makes it possible to output, for example, linear-shaped illumination light so as to direct toward the display section 20. Therefore, the fourth embodiment attains the same effect as the first embodiment. It is to be noted that either an active-matrix-driving system or a passive-matrix-driving system may be selected also in the fourth embodiment, and an LED having another structure may be adopted.

### [Fifth Embodiment]

Next, a fifth embodiment of the present disclosure will be described in detail with reference to the accompanying drawings. A display device according to the fifth embodiment is of the type that an electronic particulate element 6 which contains an electronic toner 63B, for example, as illustrated in FIG. 23A in the backlight 30 as the lighting unit. FIG. 23A is a sectional diagram illustrating an example of a configuration of the electronic particulate element 6. The display device according to the fifth embodiment is configured in the same manner as the display device 100 excepting a point that the electronic particulate element 6 is used. Thus, in the following, the electronic particulate element 6 will be described.

### [Configuration of Electronic Particulate Element]

The electronic particulate element 6 is of the type that, for example, a lower substrate 61, a plurality of lower electrodes 62, a light modulation layer 63 which includes the plurality of electronic toners 63B, a plurality of upper electrodes 65, and an upper substrate 66 are arranged in order, starting from a position near the reflector 4. Here, an outer surface (opposite to a surface on which the upper electrodes 65 are disposed) of the upper substrate 66 is adhered to a rear surface of the light guiding plate 1. The light modulation layer 63 is irradiated with illumination light from the upper substrate 66.

The lower substrate 61 is made of, for example, an inorganic material, a metallic material, a plastic material, and/or the like. The inorganic material includes, for example, silicon (Si), silicon oxide (SiOₓ), silicon nitride (SiNₓ), aluminum oxide (AlOₓ), and/or the like. The silicon oxide includes glass, spin-on-glass (SOG), and/or the like. The metallic material includes, for example, aluminum (Al), nickel (Ni), stainless steel, and/or the like. The plastic material includes, for example, polycarbonate (PC), polyethylene terephtalate (PET), polyethylene naphthalate (PEN), polyether ether ketone (PEEK), and/or the like.

The lower substrate 61 may be either light-permeable or light-impermeable because illumination light is radiated from the upper substrate 66. In addition, the lower substrate 61 may be either a rigid substrate such as a wafer or may be made of a flexible thin-layered glass sheet or film.

The upper substrate 66 is made of the same material as the lower substrate 61. However, the upper substrate is light-permeable.

Both the plurality of lower electrodes 62 and the plurality of upper electrodes 65 which are respectively disposed on opposite surfaces of the lower substrate 61 and the upper substrate 66 are, for example, strip electrodes each having a rectangular plane. The plurality of lower electrodes 62 are arranged separately from one another so as to, for example, extend in the Y-axis direction as their longitudinal direction and to be arrayed in the X-axis direction. On the other hand, the plurality of upper electrodes 65 are arranged separately from one another so as to, for example, extend in the X-axis direction as their longitudinal direction and to be arrayed in the Y-axis direction. That is, in the electronic particulate element 6, each region where the lower electrode 62 three-dimensionally intersects the upper electrode 65 serves as one light modulation cell 6S.

The lower electrode 62 is made of various conductive materials such as, for example, metallic materials such as gold (Au), silver (Ag), copper (Cu) and/or the like, compounds such as indium tin oxide (ITO), and/or the like, other alloys, and/or the like. The upper electrode 65 is made of a translucent conductive material (a transparent electrode material) such as, for example, indium tin oxide (ITO), antimony tin oxide (ATO), fluorine-doped tin oxide (FTO), aluminum-doped zinc oxide (AZO), and/or the like. The upper substrate 66 is in contact with the light guiding plate 1 (see FIG. 4) and is made of a material which is the same as the light guiding plate 1 in refractive index in order to ensure light-guiding property. As an alternative, the light guiding plate 1 may be used also as the upper substrate 66.

The light modulation layer 63 is of the type that the plurality of electronic toners 63B are sealed into a space which is filled with air 63A. The light modulation layer 63 is adapted to move the electronic toners 63B in the Z-axis direction by applying a voltage between the lower electrode 62 and the upper electrode 65, thereby creating contract by utilizing light scattering characteristics of the electronic toners 63B. Each electronic toner 63B is a white or almost white electrostatic fine particle. Specifically, the electronic toner 63B contains metal oxides such as, for example, titanium oxide, zinc oxide, zirconium oxide, barium titanate, potassium titanate, and/or the like as constitutional materials. Since the electronic toner 63B exhibits a white or almost white color, visible light is efficiently scattered and the intensity of light reflected from the electronic toner 63B is increased. Therefore, brighter illumination light is obtained.

Incidentally, it is preferable that the electronic toner 63B be liable to be dispersed and charged over a long period of time. Thus, a dispersing agent (or a charge modifier) may be used in order to make the electronic toner 63B disperse by electrostatic repulsion, surface treatment may be performed on the electronic toner 63B, or both of them may be adopted simultaneously.

### [Operation and Effect of Electronic Particulate Element]

The fifth embodiment is configured to selectively form a non-scattering region 6A (described later) and a scattering region 6B (described later) by passive-matrix-driving each light modulation cell 6S. In the electronic particulate element 6, if a voltage is applied between the lower electrode 62 and the upper electrode 65, the electronic toner 63B which has been charged by the action of an electric field generated between the electrodes moves in the Z-axis direction and is positioned in the vicinity of a surface of the upper electrode 65, for example, as illustrated in FIG. 23A. Here, for example, the negatively charged electronic toner 63B is adsorbed to the upper electrode 65 as a positive electrode. FIG. 23A illustrates a state that the voltage has been applied between all the lower electrodes 62 and all the upper electrodes 65. In the above mentioned case, visible light is scattered over the entire surface with the electronic toners 63B to exhibit a totally light-emitted state in which contrast is not substantially created when observing the electronic particulate element 6 from above the upper substrate 66.

Here, for example, some lower electrodes 62 and some upper electrodes 65 are selected and a voltage is applied between the selected electrodes so as to have a polarity opposite to that illustrated in FIG. 23A. That is, the voltage is applied such that, for example, the selected lower electrode 62A functions as a positive electrode and the selected upper electrode 65A functions as a negative electrode as illustrated in FIG. 23B. When an electric field is generated between the selected lower electrode 62A and upper electrode 65A, the electronic toners 63B which are present in a region where the electric field has been generated move from the vicinity of the surface of the upper electrode 65A to the vicinity of the surface of the lower electrode 62A, for example, as illustrated in FIG. 23B. As a result, visible light is scattered with the electronic toners 63B in the vicinity of the surface of the lower electrode 62A in a light modulation cell 6S2 which is a region where the lower electrode 62A three-dimensionally intersects the upper electrode 65A and hence total reflection of the light guiding plate 1 is maintained in the region. Thus, the light modulation cell 6S2 serves as the non-scattering region 6A, the light modulation cell 6S other than the above serves as the scattering region 6B, and hence the luminance of the region 6B is more increased than the non-scattering region 6A, when observing the electronic particulate element 6 from above the upper substrate 66. Thus, light is selectively emitted in an in-plane direction to exhibit a state that contrast is created.

Therefore, the electronic particulate element 6 makes it possible to form an arbitrary emission pattern in a plane. Owing to the above, it becomes possible to output, for example, linear-shaped illumination light so as to direct toward the display section 20 also in the backlight 30 which uses the electronic particulate element 6 and hence the fifth embodiment attains the same effect as the first embodiment. Incidentally, even if a black particle that absorbs visible light such as, for example, carbon black is used as the electronic toner 63B, contrast is created and hence an arbitrary emission pattern is formed. However, it is rather preferable to use a white particle as the electronic toner 63B because more effective utilization of light energy of the light source 2 is possible by using the white particle.

In the fifth embodiment, the electronic toner 63B is caused to be present in the air 63A in the light modulation layer 63. Therefore, the electronic toner 63B becomes favorably liable to move and hence excellent operational responsiveness is ensured in comparison with the electronic paper 7 in which the electrophoresis particles 76 are dispersed in a liquid phase.

Although the fifth embodiment is configured to form an arbitrary emission pattern by passive-matrix-driving the light modulation layer 63, the layer 63 may be active-matrix-driven. In the latter case, the plurality of lower electrodes 62 (or the plurality of upper electrodes 65) may be arranged in a matrix and a drive element corresponding to each lower electrode 62 (or each upper electrode 65) may be disposed. In addition, a partition wall that partitions the space in the light modulation layer 63 may be disposed for every light modulation cell 6S in order to avoid non-uniformity (non-uniform distribution) of the electronic toners 63B in the XY plane.

### [Sixth Embodiment]

Next, an application example of the above mentioned display device will be described.

The display device according to any one of the embodiments and the modifications of the present technology disclosed herein is applicable to an electronic system used for various applications and no limitation is set on the kind of electronic system. The display device may be loaded on electronic system, for example, of the kinds as follows. However, since configurations of electronic system which will be described hereinbelow are merely examples, the configuration may be appropriately modified and altered.

FIG. 24A and FIG. 24B illustrate examples of an external configuration of a so-called tablet type personal computer (PC). The tablet type PC includes, for example, a display section 110, a non-display section 120 such as a housing which holds the display section 110, and an operation section 130 such as a power switch. It is to be noted that the operation section 130 may be disposed either on a front surface of the non-display section 120, for example, as illustrated in FIG. 24A or on its upper surface, for example, as illustrated in FIG. 24B. The display section 120 is a touch screen (a touch panel) having an image displaying function and a position inputting function (a pointing function).

The display device according to any one of the embodiments and the modifications of the present technology may be used, other than the tablet type PC illustrated in FIGs. 24A and 24B, as an image display part of, for example, a notebook personal computer (PC), a mobile phone, a digital still camera, a video camera and/or an automotive navigation system.

Although the present technology has been described by giving several embodiments and the modifications, the present technology is not limited to these embodiments and modifications and may be modified and altered in a variety of ways. For example, although in the above embodiments and the modifications, description has been made by illustrating the backlight which includes the light modulation elements utilizing the PDLCs, the backlight which includes the electronic paper, the backlight which includes the organic light emitting elements (OLEDs), and the backlight which includes the LEDs have been described as the lighting units, the present technology is not limited to the above.

Accordingly, it is possible to achieve at least the following configurations from the above-described example embodiments and the modifications of the disclosure.
(1) A method of displaying stereoscopic images with use of a display device provided with a lighting unit and a display section, the lighting unit including a plurality of two-dimensionally-arrayed light emitting sections, and the display section performing image display through utilizing light from the light emitting sections, the method including:
   detecting an attitude of the display device relative to a viewer;
   driving the plurality of light emitting sections on an individual basis, to allow an emission pattern to be formed according to the attitude of the display device; and
   displaying a plurality of perspective images all together, according to the attitude of the display device on the display section based on an external image signal.
(2) The display method according to (1), wherein the emission pattern is formed in synchronization with display of the plurality of perspective images.
(3) The display method according to (1) or (2), wherein the emission pattern allows linear-shaped illumination light to be generated.
(4) A display device, including:
   a lighting unit including a plurality of two-dimensionally-arrayed light emitting sections, and a drive section driving the plurality of light emitting sections on an individual basis; and
   a display section including a plurality of pixels to perform image display through utilizing light from the light emitting sections.
(5) The display device according to (4), further including a sensor section detecting its own attitude relative to a viewer.
(6) The display device according to (5), wherein the sensor section is configured of an acceleration sensor or an image recognition device.
(7) The display device according to (4) or (5), wherein the plurality of light emitting sections form an emission pattern which allows a plurality of rays of linear-shaped illumination light to be generated.
(8) The display device according to (7), further including a control section driving the display section and the lighting unit, to allow the display section to display a plurality of perspective images all together, and to allow the lighting unit to form the emission pattern in synchronization with display of the plurality of perspective images.
(9) An electronic system provided with a display device, the display device including:
   a lighting unit including a plurality of two-dimensionally-arrayed light emitting sections, and a drive section driving the plurality of light emitting sections on an individual basis; and
   a display section including a plurality of pixels to perform image display through utilizing light from the light emitting sections.
(10) A lighting unit provided for a display device, the lighting unit including:
   a plurality of two-dimensionally-arrayed light emitting sections; and
   a drive section driving the plurality of light emitting sections on an individual basis.
(11) The lighting unit according to (10), wherein the drive section includes:
   a plurality of first wirings extending in a first direction;
   a plurality of second wirings extending in a second direction which is different from the first direction; and
   a plurality of drive elements disposed corresponding to the plurality of light emitting sections, respectively.
(12) The lighting unit according to (11), wherein the drive section includes a voltage applying section applying a predetermined voltage based on an input signal between one or more selected from the plurality of first wirings and one or more selected from the plurality of second wirings.

The present disclosure contains subject matter related to that disclosed in Japanese Priority Patent Application JP 2011-171926 filed in the Japan Patent Office on August 5, 2011 and contains subject matter related to that disclosed in Japanese Priority Patent Application JP 2011-221275 filed in the Japan Patent Office on October 5.

It should be understood by those skilled in the art that various modifications, combinations, sub-combinations and alterations may occur depending on design requirements and other factors insofar as they are within the scope of the appended claims or the equivalents thereof.
In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A method of displaying stereoscopic images with use of a display device provided with a lighting unit and a display section, the lighting unit including a plurality of two-dimensionally-arrayed light emitting sections, and the display section performing image display through utilizing light from the light emitting sections, the method comprising:
detecting an attitude of the display device relative to a viewer;
driving the plurality of light emitting sections on an individual basis, to allow an emission pattern to be formed according to the attitude of the display device; and
displaying a plurality of perspective images all together, according to the attitude of the display device on the display section based on an external image signal.

2. The display method according to claim 1, wherein the emission pattern is formed in synchronization with display of the plurality of perspective images.

3. The display method according to claim 1, wherein the emission pattern allows linear-shaped illumination light to be generated.

4. A display device, comprising:
a lighting unit including a plurality of two-dimensionally-arrayed light emitting sections, and a drive section driving the plurality of light emitting sections on an individual basis; and
a display section including a plurality of pixels to perform image display through utilizing light from the light emitting sections.

5. The display device according to claim 4, further comprising a sensor section detecting its own attitude relative to a viewer.

6. The display device according to claim 5, wherein the sensor section is configured of an acceleration sensor or an image recognition device.

7. The display device according to claim 4, wherein the plurality of light emitting sections form an emission pattern which allows a plurality of rays of linear-shaped illumination light to be generated.

8. The display device according to claim 7, further comprising a control section driving the display section and the lighting unit, to allow the display section to display a plurality of perspective images all together, and to allow the lighting unit to form the emission pattern in synchronization with display of the plurality of perspective images.

9. An electronic system provided with a display device, the display device comprising:
a lighting unit including a plurality of two-dimensionally-arrayed light emitting sections, and a drive section driving the plurality of light emitting sections on an individual basis; and
a display section including a plurality of pixels to perform image display through utilizing light from the light emitting sections.

10. A lighting unit provided for a display device, the lighting unit comprising:
a plurality of two-dimensionally-arrayed light emitting sections; and
a drive section driving the plurality of light emitting sections on an individual basis.

11. The lighting unit according to claim 10, wherein the drive section includes:
a plurality of first wirings extending in a first direction;
a plurality of second wirings extending in a second direction which is different from the first direction; and
a plurality of drive elements disposed corresponding to the plurality of light emitting sections, respectively.

12. The lighting unit according to claim 11, wherein the drive section includes a voltage applying section applying a predetermined voltage based on an input signal between one or more selected from the plurality of first wirings and one or more selected from the plurality of second wirings.
